# EUROPEAN PATENT APPLICATION

(11) **EP 4 794 411 A2**
(43) Date of publication of application: **19.08.2026**
(21) Application number: 26182801.6
(22) Date of filing: 01.08.2021
(51) Int. Cl.: H04W 64/00

(54) **USING POSITIONING INFORMATION WITH RADIO RESOURCE MANAGEMENT MEASUREMENTS**

(30) Priority: 04.08.2020 IN 202041033321
(62) Document number(s) of the earlier application(s) in accordance with Art. 76 EPC: 21762857.7 / 4 193 652
(71) Applicant: QUALCOMM Incorporated, San Diego, CA 92121-1714 (US)
(72) Inventor: YERRAMALLI, Srinivas, San Diego, 92121 (US); KUMAR, Mukesh, San Diego, 92121 (US); MANOLAKOS, Alexandros, San Diego, 92121 (US)
(74) Representative: Reddie & Grose LLP

(57) **Abstract**

Techniques are provided for reducing the network signaling associated with radio resource management (RRM) measurements and mobility procedures. An example method for performing radio resource management measurements includes receiving positioning assistance data including station location information, determining a current location and a future trajectory, and performing radio resource management measurements with one or more stations based at least in part on the positioning assistance data and the future trajectory.

## Description

### BACKGROUND

Wireless communication networks have developed through various generations, including a first-generation analog wireless phone service (1G), a second-generation (2G) digital wireless phone service (including interim 2.5G and 2.75G networks), a third-generation (3G) high speed data, Internet-capable wireless service, a fourth-generation (4G) service (e.g., Long Term Evolution (LTE) or WiMax), and a fifth generation (5G) service (e.g., 5G New Radio (NR)). There are presently many different types of wireless communication networks in use, including Cellular and Personal Communications Service (PCS) systems. Examples of known cellular systems include the cellular Analog Advanced Mobile Phone System (AMPS), and digital cellular systems based on Code Division Multiple Access (CDMA), Frequency Division Multiple Access (FDMA), Time Division Multiple Access (TDMA), the Global System for Mobile access (GSM) variation of TDMA, etc.

A wireless communication network may include a number of base stations that can support communication for a number of user equipments (UEs). A UE may communicate with a base station via downlink and uplink. The downlink (or forward link) refers to the communication link from the base station to the UE, and the uplink (or reverse link) refers to the communication link from the UE to the base station.

A base station may transmit data and control information on the downlink to a UE and/or may receive data and control information on the uplink from the UE. On the downlink, a transmission from the base station may encounter interference due to transmissions from neighbor base stations or from other wireless radio frequency (RF) transmitters. On the uplink, a transmission from the UE may encounter interference from uplink transmissions of other UEs communicating with the neighbor base stations or from other wireless RF transmitters. This interference may degrade performance on both the downlink and uplink.

As more base stations are deployed to provide added wireless coverage and/or capacity, issues with respect to co-existence become more prevalent. Base stations of neighboring cells, whether associated with a same operator or different operators, may utilize one or more of the same frequencies, whereby the transmissions by the base stations and/or UEs of the neighboring cells may present interference with respect to one another. Radio resource management procedures may be used to facilitate the co-existence of the neighboring cells and reduce the impact of such interference.

### SUMMARY

An example method for performing radio resource management measurements according to the disclosure includes receiving positioning assistance data including station location information, determining a current location and a future trajectory, and performing radio resource management measurements with one or more stations based at least in part on the positioning assistance data and the future trajectory.

Implementations of such a method may include one or more of the following features. The positioning assistance data may be included in one or more broadcast messages. A request for positioning assistance data may be sent, and receiving the positioning assistance data may be in response to sending the request. The positioning assistance data may be included in one or more radio resource control messages. The positioning assistance data may be included in one or more positioning system information blocks. The positioning assistance data may be encrypted. The method may further include determining one or more tangent lines based on the current location and the future trajectory, determining one or more tracking stations based on the station location information relative to the one or more tangent lines, and performing the radio resource management measurements with the one or more tracking stations. The method may also include determining a range and a bearing to each of the one or more stations based on the station location information and the current location, determining one or more tracking stations based on the respective ranges and bearings of the one or more stations relative to the future trajectory, and performing the radio resource management measurements with the one or more tracking stations. The radio resource management measurements may include one or more of Reference Signal Received Power (RSRP), Reference Signal Received Quality (RSRQ) and Signal To Interference plus Noise (SINR) values. The positioning assistance data may include real time delay information for the one or more stations, and the method further include determining one or more search windows based on the real time delay information, and performing the radio resource management measurements based at least in part on the one or more search windows.

An example method for obtaining radio resource management measurements in a search window according to the disclosure includes determining real time difference information for a plurality of network stations, determining the search window for radio resource management signals based at least in part on the real time difference information, receive one or more radio resource management signals during the search window, and providing measurement information to a network based on the radio resource management signals.

Implementations of such a method may include one or more of the following features. Positioning assistance data including the real time difference information may be received. The positioning assistance data may be included in one or more broadcast messages. A request for positioning assistance data may be sent and receiving the positioning assistance data in response to sending the request. The positioning assistance data may be included in one or more radio resource control messages. The positioning assistance data may be included in one or more positioning system information blocks. The radio resource management signals may include at least one of a synchronization signal burst and a channel-state information reference signal. The measurement information may include one or more of Reference Signal Received Power (RSRP), Reference Signal Received Quality (RSRQ) and Signal To Interference plus Noise (SINR) values. The search window may be approximately 2 to 4 milliseconds in duration.

An apparatus according to the disclosure includes a memory, at least one transceiver, at least one processor communicatively coupled to the memory and the at least one transceiver and configured to receive positioning assistance data including station location information, determine a current location and a future trajectory, and perform radio resource management measurements with one or more stations based at least in part on the positioning assistance data and the future trajectory.

Implementations of such an apparatus may include one or more of the following features. The positioning assistance data may be included in one or more broadcast messages. The at least one processor may be further configured to send a request for positioning assistance data and receive the positioning assistance data in response to sending the request. The positioning assistance data may be included in one or more radio resource control messages. The positioning assistance data may be included in one or more positioning system information blocks. The positioning assistance data may be encrypted. The at least one processor may be further configured to determine one or more tangent lines based on the current location and the future trajectory, determine one or more tracking stations based on the station location information relative to the one or more tangent lines, and perform the radio resource management measurements with the one or more tracking stations. The at least one processor may be further configured to determine a range and a bearing to each of the one or more stations based on the station location information and the current location, determine one or more tracking stations based on the respective ranges and bearings of the one or more stations relative to the future trajectory, and perform the radio resource management measurements with the one or more tracking stations. The radio resource management measurements may include one or more of Reference Signal Received Power (RSRP), Reference Signal Received Quality (RSRQ) and Signal To Interference plus Noise (SINR) values. The positioning assistance data may include real time delay information for the one or more stations, and the at least one processor may be further configured to determine one or more search windows based on the real time delay information, and perform the radio resource management measurements based at least in part on the one or more search windows.

An example apparatus according to the disclosure includes a memory, at least one transceiver, at least one processor communicatively coupled to the memory and the at least one transceiver and configured to determine real time difference information for a plurality of network stations, determine a search window for radio resource management signals based at least in part on the real time difference information, receive one or more radio resource management signals during the search window, and provide measurement information to a network based on the radio resource management signals.

Implementations of such an apparatus may include one or more of the following features. The at least one processor may be further configured to receive positioning assistance data including the real time difference information. The positioning assistance data may be included in one or more broadcast messages. The at least one processor may be further configured to send a request for positioning assistance data and receive the positioning assistance data in response to sending the request. The positioning assistance data may be included in one or more radio resource control messages. The positioning assistance data may be included in one or more positioning system information blocks. The radio resource management signals may include at least one of a synchronization signal burst and a channel-state information reference signal. The measurement information may include one or more of Reference Signal Received Power (RSRP), Reference Signal Received Quality (RSRQ) and Signal To Interference plus Noise (SINR) values. The search window may be approximately 2 to 4 milliseconds in duration.

An example apparatus for performing radio resource management measurements according to the disclosure includes means for receiving positioning assistance data including station location information, means for determining a current location and a future trajectory, and means for performing radio resource management measurements with one or more stations based at least in part on the positioning assistance data and the future trajectory.

An example apparatus for obtaining radio resource management measurements in a search window according to the disclosure includes means for determining real time difference information for a plurality of network stations, means for determining the search window for radio resource management signals based at least in part on the real time difference information, means for receiving one or more radio resource management signals during the search window, and means for providing measurement information to a network based on the radio resource management signals.

An example non-transitory processor-readable storage medium comprising processor-readable instructions configured to cause one or more processors to perform radio resource management measurements according to the disclosure includes code for receiving positioning assistance data including station location information, code for determining a current location and a future trajectory, and code for performing radio resource management measurements with one or more stations based at least in part on the positioning assistance data and the future trajectory.

An example non-transitory processor-readable storage medium comprising processor-readable instructions configured to cause one or more processors to obtain radio resource management measurements in a search window according to the disclosure includes code for determining real time difference information for a plurality of network stations, code for determining the search window for radio resource management signals based at least in part on the real time difference information, code for receiving one or more radio resource management signals during the search window, and code for providing measurement information to a network based on the radio resource management signals.

Items and/or techniques described herein may provide one or more of the following capabilities, as well as other capabilities not mentioned. User equipment may receive positioning assistance information from a network. The positioning assistance information may include station location and real time delay information. A location and direction of motion may be determined for the user equipment. Radio resource management tracking stations may be selected based on the station location information and the direction of motion. Radio resource management measurements may be obtained based on signals transmitted from the tracking stations. The user equipment may be configured to determine search windows for the radio resource management signals based on the real time delay information. User equipment power savings may be realized based on reductions in the number of station searches and/or reductions in search time. Network message traffic may be reduced. Other capabilities may be provided and not every implementation according to the disclosure must provide any, let alone all, of the capabilities discussed.

### BRIEF DESCRIPTION OF THE DRAWINGS

FIG. 1 is a simplified diagram of an example wireless communications system.
FIG. 2 is a block diagram of components of an example user equipment shown in FIG. 1.
FIG. 3 is a block diagram of components of an example transmission/reception point shown in FIG. 1.
FIG. 4 is a block diagram of components of an example server shown in FIG. 1.
FIG. 5A is an example synchronization signal in a fifth-generation new radio (5G NR) wireless network.
FIG. 5B is an example channel-state information reference signal (CSI-RS) periodicity configuration in a 5G NR wireless network.
FIG. 6 is a conceptual diagram of directional beams transmitted from a base station based on a synchronization signal (SS) burst.
FIG. 7 is an example message flow for the broadcast of positioning assistance data.
FIG. 8 is a conceptual diagram of a user equipment moving on a trajectory through a plurality of stations.
FIG. 9 includes timelines with example real time difference (RTD) values for different stations.
FIG. 10 is a process flow of an example method for providing signal measurements to a network.
FIG. 11 is a process flow of an example method for performing radio resource management measurements.
FIG. 12 is a process flow of an example method for obtaining radio resource management measurements in a search window.

### DETAILED DESCRIPTION

Techniques are discussed herein for reducing network signaling associated with radio resource management (RRM) measurements and mobility procedures. For example, a mobile UE may be moving along a trajectory through different cell and/or beam coverage areas and may periodically receive position assistance data from a network. The assistance data may include positioning reference signal configurations, base station location information, and real time difference (RTD) information associated with the base stations. The UE may utilize the assistance data to determine the location of serving and neighbor cells. The cells and/or beams closest to the trajectory may be tracked and RRM measurements may be obtained. The UE may prioritize the cells and/or beams in the direction of motion rather than the cells in the opposite direction. The prioritization may conserve UE power and reduce reporting overhead. In an example, the RTD information may be used to narrow the search window required by the UE to obtain RRM measurements. Narrowing the search window may also conserve UE power by reducing the active search time. These techniques and configurations are examples, and other techniques and configurations may be used.

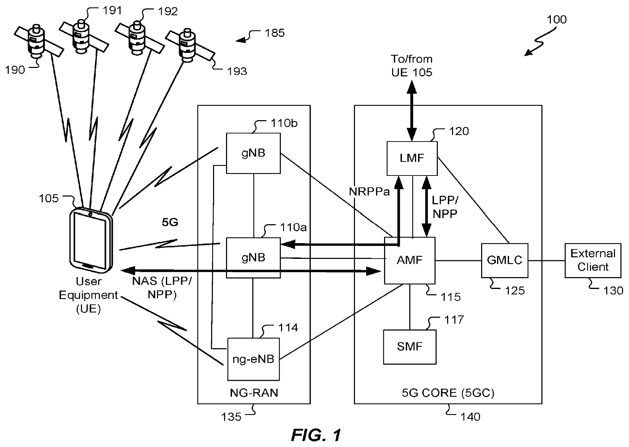

Referring to FIG. 1, an example of a communication system 100 includes a UE 105, a Radio Access Network (RAN) 135, here a Fifth Generation (5G) Next Generation (NG) RAN (NG-RAN), and a 5G Core Network (5GC) 140. The UE 105 may be, e.g., an IoT device, a location tracker device, a cellular telephone, or other device. A 5G network may also be referred to as a New Radio (NR) network; NG-RAN 135 may be referred to as a 5G RAN or as an NR RAN; and 5GC 140 may be referred to as an NG Core network (NGC). Standardization of an NG-RAN and 5GC is ongoing in the 3^{rd} Generation Partnership Project (3GPP). Accordingly, the NG-RAN 135 and the 5GC 140 may conform to current or future standards for 5G support from 3GPP. The RAN 135 may be another type of RAN, e.g., a 3G RAN, a 4G Long Term Evolution (LTE) RAN, etc. The communication system 100 may utilize information from a constellation 185 of satellite vehicles (SVs) 190, 191, 192, 193 for a Satellite Positioning System (SPS) (e.g., a Global Navigation Satellite System (GNSS)) like the Global Positioning System (GPS), the Global Navigation Satellite System (GLONASS), Galileo, or Beidou or some other local or regional SPS such as the Indian Regional Navigational Satellite System (IRNSS), the European Geostationary Navigation Overlay Service (EGNOS), or the Wide Area Augmentation System (WAAS). Additional components of the communication system 100 are described below. The communication system 100 may include additional or alternative components.

As shown in FIG. 1, the NG-RAN 135 includes NR nodeBs (gNBs) 110a, 110b, and a next generation eNodeB (ng-eNB) 114, and the 5GC 140 includes an Access and Mobility Management Function (AMF) 115, a Session Management Function (SMF) 117, a Location Management Function (LMF) 120, and a Gateway Mobile Location Center (GMLC) 125. The gNBs 110a, 110b and the ng-eNB 114 are communicatively coupled to each other, are each configured to bi-directionally wirelessly communicate with the UE 105, and are each communicatively coupled to, and configured to bi-directionally communicate with, the AMF 115. The AMF 115, the SMF 117, the LMF 120, and the GMLC 125 are communicatively coupled to each other, and the GMLC is communicatively coupled to an external client 130. The SMF 117 may serve as an initial contact point of a Service Control Function (SCF) (not shown) to create, control, and delete media sessions.

FIG. 1 provides a generalized illustration of various components, any or all of which may be utilized as appropriate, and each of which may be duplicated or omitted as necessary. Specifically, although one UE 105 is illustrated, many UEs (e.g., hundreds, thousands, millions, etc.) may be utilized in the communication system 100. Similarly, the communication system 100 may include a larger (or smaller) number of SVs (i.e., more or fewer than the four SVs 190-193 shown), gNBs 110a, 110b, ng-eNBs 114, AMFs 115, external clients 130, and/or other components. The illustrated connections that connect the various components in the communication system 100 include data and signaling connections which may include additional (intermediary) components, direct or indirect physical and/or wireless connections, and/or additional networks. Furthermore, components may be rearranged, combined, separated, substituted, and/or omitted, depending on desired functionality.

While FIG. 1 illustrates a 5G-based network, similar network implementations and configurations may be used for other communication technologies, such as 3G, Long Term Evolution (LTE), etc. Implementations described herein (be they for 5G technology and/or for one or more other communication technologies and/or protocols) may be used to transmit (or broadcast) directional synchronization signals, receive and measure directional signals at UEs (e.g., the UE 105) and/or provide location assistance to the UE 105 (via the GMLC 125 or other location server) and/or compute a location for the UE 105 at a location-capable device such as the UE 105, the gNB 110a, 110b, or the LMF 120 based on measurement quantities received at the UE 105 for such directionally-transmitted signals. The gateway mobile location center (GMLC) 125, the location management function (LMF) 120, the access and mobility management function (AMF) 115, the SMF 117, the ng-eNB (eNodeB) 114 and the gNBs (gNodeBs) 110a, 110b are examples and may, in various embodiments, be replaced by or include various other location server functionality and/or base station functionality respectively.

The UE 105 may comprise and/or may be referred to as a device, a mobile device, a wireless device, a mobile terminal, a terminal, a mobile station (MS), a Secure User Plane Location (SUPL) Enabled Terminal (SET), or by some other name. Moreover, the UE 105 may correspond to a cellphone, smartphone, laptop, tablet, PDA, tracking device, navigation device, Internet of Things (IoT) device, asset tracker, health monitors, security systems, smart city sensors, smart meters, wearable trackers, or some other portable or moveable device. Typically, though not necessarily, the UE 105 may support wireless communication using one or more Radio Access Technologies (RATs) such as Global System for Mobile communication (GSM), Code Division Multiple Access (CDMA), Wideband CDMA (WCDMA), LTE, High Rate Packet Data (HRPD), IEEE 802.11 WiFi (also referred to as Wi-Fi), Bluetooth^{®} (BT), Worldwide Interoperability for Microwave Access (WiMAX), 5G new radio (NR) (e.g., using the NG-RAN 135 and the 5GC 140), etc. The UE 105 may support wireless communication using a Wireless Local Area Network (WLAN) which may connect to other networks (e.g., the Internet) using a Digital Subscriber Line (DSL) or packet cable, for example. The use of one or more of these RATs may allow the UE 105 to communicate with the external client 130 (e.g., via elements of the 5GC 140 not shown in FIG. 1, or possibly via the GMLC 125) and/or allow the external client 130 to receive location information regarding the UE 105 (e.g., via the GMLC 125).

The UE 105 may include a single entity or may include multiple entities such as in a personal area network where a user may employ audio, video and/or data I/O (input/output) devices and/or body sensors and a separate wireline or wireless modem. An estimate of a location of the UE 105 may be referred to as a location, location estimate, location fix, fix, position, position estimate, or position fix, and may be geographic, thus providing location coordinates for the UE 105 (e.g., latitude and longitude) which may or may not include an altitude component (e.g., height above sea level, height above or depth below ground level, floor level, or basement level). Alternatively, a location of the UE 105 may be expressed as a civic location (e.g., as a postal address or the designation of some point or small area in a building such as a particular room or floor). A location of the UE 105 may be expressed as an area or volume (defined either geographically or in civic form) within which the UE 105 is expected to be located with some probability or confidence level (e.g., 67%, 95%, etc.). A location of the UE 105 may be expressed as a relative location comprising, for example, a distance and direction from a known location. The relative location may be expressed as relative coordinates (e.g., X, Y (and Z) coordinates) defined relative to some origin at a known location which may be defined, e.g., geographically, in civic terms, or by reference to a point, area, or volume, e.g., indicated on a map, floor plan, or building plan. In the description contained herein, the use of the term location may comprise any of these variants unless indicated otherwise. When computing the location of a UE, it is common to solve for local x, y, and possibly z coordinates and then, if desired, convert the local coordinates into absolute coordinates (e.g., for latitude, longitude, and altitude above or below mean sea level).

The UE 105 may be configured to communicate with other entities using one or more of a variety of technologies. The UE 105 may be configured to connect indirectly to one or more communication networks via one or more device-to-device (D2D) peer-to-peer (P2P) links. The D2D P2P links may be supported with any appropriate D2D radio access technology (RAT), such as LTE Direct (LTE-D), WiFi Direct (WiFi-D), Bluetooth^{®}, and so on. One or more of a group of UEs utilizing D2D communications may be within a geographic coverage area of a Transmission/Reception Point (TRP) such as one or more of the gNBs 110a, 110b, and/or the ng-eNB 114. Other UEs in such a group may be outside such geographic coverage areas, or may be otherwise unable to receive transmissions from a base station. Groups of UEs communicating via D2D communications may utilize a one-to-many (1:M) system in which each UE may transmit to other UEs in the group. A TRP may facilitate scheduling of resources for D2D communications. In other cases, D2D communications may be carried out between UEs without the involvement of a TRP.

Base stations (BSs) in the NG-RAN 135 shown in FIG. 1 include NR Node Bs, referred to as the gNBs 110a and 110b. Pairs of the gNBs 110a, 110b in the NG-RAN 135 may be connected to one another via one or more other gNBs. Access to the 5G network is provided to the UE 105 via wireless communication between the UE 105 and one or more of the gNBs 110a, 110b, which may provide wireless communications access to the 5GC 140 on behalf of the UE 105 using 5G. In FIG. 1, the serving gNB for the UE 105 is assumed to be the gNB 110a, although another gNB (e.g. the gNB 110b) may act as a serving gNB if the UE 105 moves to another location or may act as a secondary gNB to provide additional throughput and bandwidth to the UE 105.

Base stations (BSs) in the NG-RAN 135 shown in FIG. 1 may include the ng-eNB 114, also referred to as a next generation evolved Node B. The ng-eNB 114 may be connected to one or more of the gNBs 110a, 110b in the NG-RAN 135, possibly via one or more other gNBs and/or one or more other ng-eNBs. The ng-eNB 114 may provide LTE wireless access and/or evolved LTE (eLTE) wireless access to the UE 105. One or more of the gNBs 110a, 110b and/or the ng-eNB 114 may be configured to function as positioning-only beacons which may transmit signals to assist with determining the position of the UE 105 but may not receive signals from the UE 105 or from other UEs.

The BSs 110a, 110b, 114 may each comprise one or more TRPs. For example, each sector within a cell of a BS may comprise a TRP, although multiple TRPs may share one or more components (e.g., share a processor but have separate antennas). The system 100 may include macro TRPs or the system 100 may have TRPs of different types, e.g., macro, pico, and/or femto TRPs , etc. A macro TRP may cover a relatively large geographic area (e.g., several kilometers in radius) and may allow unrestricted access by terminals with service subscription. A pico TRP may cover a relatively small geographic area (e.g., a pico cell) and may allow unrestricted access by terminals with service subscription. A femto or home TRP may cover a relatively small geographic area (e.g., a femto cell) and may allow restricted access by terminals having association with the femto cell (e.g., terminals for users in a home).

As noted, while FIG. 1 depicts nodes configured to communicate according to 5G communication protocols, nodes configured to communicate according to other communication protocols, such as, for example, an LTE protocol or IEEE 802.11x protocol, may be used. For example, in an Evolved Packet System (EPS) providing LTE wireless access to the UE 105, a RAN may comprise an Evolved Universal Mobile Telecommunications System (UMTS) Terrestrial Radio Access Network (E-UTRAN) which may comprise base stations comprising evolved Node Bs (eNBs). A core network for EPS may comprise an Evolved Packet Core (EPC). An EPS may comprise an E-UTRAN plus EPC, where the E-UTRAN corresponds to the NG-RAN 135 and the EPC corresponds to the 5GC 140 in FIG. 1.

The gNBs 110a, 110b and the ng-eNB 114 may communicate with the AMF 115, which, for positioning functionality, communicates with the LMF 120. The AMF 115 may support mobility of the UE 105, including cell change and handover and may participate in supporting a signaling connection to the UE 105 and possibly data and voice bearers for the UE 105. The LMF 120 may communicate directly with the UE 105, e.g., through wireless communications. The LMF 120 may support positioning of the UE 105 when the UE 105 accesses the NG-RAN 135 and may support position procedures / methods such as Assisted GNSS (A-GNSS), Observed Time Difference of Arrival (OTDOA), Real Time Kinematics (RTK), Precise Point Positioning (PPP), Differential GNSS (DGNSS), Enhanced Cell ID (E-CID), angle of arrival (AOA), angle of departure (AOD), and/or other position methods. The LMF 120 may process location services requests for the UE 105, e.g., received from the AMF 115 or from the GMLC 125. The LMF 120 may be connected to the AMF 115 and/or to the GMLC 125. The LMF 120 may be referred to by other names such as a Location Manager (LM), Location Function (LF), commercial LMF (CLMF), or value added LMF (VLMF). A node / system that implements the LMF 120 may additionally or alternatively implement other types of location-support modules, such as an Enhanced Serving Mobile Location Center (E-SMLC) or a Secure User Plane Location (SUPL) Location Platform (SLP). At least part of the positioning functionality (including derivation of the location of the UE 105) may be performed at the UE 105 (e.g., using signal measurements obtained by the UE 105 for signals transmitted by wireless nodes such as the gNBs 110a, 110b and/or the ng-eNB 114, and/or assistance data provided to the UE 105, e.g. by the LMF 120).

The GMLC 125 may support a location request for the UE 105 received from the external client 130 and may forward such a location request to the AMF 115 for forwarding by the AMF 115 to the LMF 120 or may forward the location request directly to the LMF 120. A location response from the LMF 120 (e.g., containing a location estimate for the UE 105) may be returned to the GMLC 125 either directly or via the AMF 115 and the GMLC 125 may then return the location response (e.g., containing the location estimate) to the external client 130. The GMLC 125 is shown connected to both the AMF 115 and LMF 120, though one of these connections may be supported by the 5GC 140 in some implementations.

As further illustrated in FIG. 1, the LMF 120 may communicate with the gNBs 110a, 110b and/or the ng-eNB 114 using a New Radio Position Protocol A (which may be referred to as NPPa or NRPPa), which may be defined in 3GPP Technical Specification (TS) 38.455. NRPPa may be the same as, similar to, or an extension of the LTE Positioning Protocol A (LPPa) defined in 3GPP TS 36.455, with NRPPa messages being transferred between the gNB 110a (or the gNB 110b) and the LMF 120, and/or between the ng-eNB 114 and the LMF 120, via the AMF 115. As further illustrated in FIG. 1, the LMF 120 and the UE 105 may communicate using an LTE Positioning Protocol (LPP), which may be defined in 3GPP TS 36.355. The LMF 120 and the UE 105 may also or instead communicate using a New Radio Positioning Protocol (which may be referred to as NPP or NRPP), which may be the same as, similar to, or an extension of LPP. Here, LPP and/or NPP messages may be transferred between the UE 105 and the LMF 120 via the AMF 115 and the serving gNB 110a, 110b or the serving ng-eNB 114 for the UE 105. For example, LPP and/or NPP messages may be transferred between the LMF 120 and the AMF 115 using a 5G Location Services Application Protocol (LCS AP) and may be transferred between the AMF 115 and the UE 105 using a 5G Non-Access Stratum (NAS) protocol. The LPP and/or NPP protocol may be used to support positioning of the UE 105 using UE-assisted and/or UE-based position methods such as A-GNSS, RTK, OTDOA and/or E-CID. The NRPPa protocol may be used to support positioning of the UE 105 using network-based position methods such as E-CID (e.g., when used with measurements obtained by the gNB 110a, 110b or the ng-eNB 114) and/or may be used by the LMF 120 to obtain location related information from the gNBs 110a, 110b and/or the ng-eNB 114, such as parameters defining directional SS transmissions from the gNBs 110a, 110b, and/or the ng-eNB 114.

With a UE-assisted position method, the UE 105 may obtain location measurements and send the measurements to a location server (e.g., the LMF 120) for computation of a location estimate for the UE 105. For example, the location measurements may include one or more of a Received Signal Strength Indication (RSSI), Round Trip signal propagation Time (RTT), Reference Signal Time Difference (RSTD), Reference Signal Received Power (RSRP) and/or Reference Signal Received Quality (RSRQ) for the gNBs 110a, 110b, the ng-eNB 114, and/or a WLAN AP. The location measurements may also or instead include measurements of GNSS pseudorange, code phase, and/or carrier phase for the SVs 190-193.

With a UE-based position method, the UE 105 may obtain location measurements (e.g., which may be the same as or similar to location measurements for a UE-assisted position method) and may compute a location of the UE 105 (e.g., with the help of assistance data received from a location server such as the LMF 120 or broadcast by the gNBs 110a, 110b, the ng-eNB 114, or other base stations or APs).

With a network-based position method, one or more base stations (e.g., the gNBs 110a, 110b, and/or the ng-eNB 114) or APs may obtain location measurements (e.g., measurements of RSSI, RTT, RSRP, RSRQ or Time Of Arrival (TOA) for signals transmitted by the UE 105) and/or may receive measurements obtained by the UE 105. The one or more base stations or APs may send the measurements to a location server (e.g., the LMF 120) for computation of a location estimate for the UE 105.

Information provided by the gNBs 110a, 110b, and/or the ng-eNB 114 to the LMF 120 using NRPPa may include timing and configuration information for directional PRS or SS transmissions and location coordinates. The LMF 120 may provide some or all of this information to the UE 105 as assistance data in an LPP and/or NPP message via the NG-RAN 135 and the 5GC 140.

An LPP or NPP message sent from the LMF 120 to the UE 105 may instruct the UE 105 to do any of a variety of things depending on desired functionality. For example, the LPP or NPP message could contain an instruction for the UE 105 to obtain measurements for GNSS (or A-GNSS), WLAN, E-CID, and/or OTDOA (or some other position method). In the case of E-CID, the LPP or NPP message may instruct the UE 105 to obtain one or more measurement quantities (e.g., beam ID, beam width, mean angle, RSRP, RSRQ measurements) of directional signals transmitted within particular cells supported by one or more of the gNBs 110a, 110b, and/or the ng-eNB 114 (or supported by some other type of base station such as an eNB or WiFi AP). The UE 105 may send the measurement quantities back to the LMF 120 in an LPP or NPP message (e.g., inside a 5G NAS message) via the serving gNB 110a (or the serving ng-eNB 114) and the AMF 115.

As noted, while the communication system 100 is described in relation to 5G technology, the communication system 100 may be implemented to support other communication technologies, such as GSM, WCDMA, LTE, etc., that are used for supporting and interacting with mobile devices such as the UE 105 (e.g., to implement voice, data, positioning, and other functionalities). In some such embodiments, the 5GC 140 may be configured to control different air interfaces. For example, the 5GC 140 may be connected to a WLAN using a Non-3GPP InterWorking Function (N3IWF, not shown FIG. 1) in the 5GC 150. For example, the WLAN may support IEEE 802.11 WiFi access for the UE 105 and may comprise one or more WiFi APs. Here, the N3IWF may connect to the WLAN and to other elements in the 5GC 140 such as the AMF 115. In some embodiments, both the NG-RAN 135 and the 5GC 140 may be replaced by one or more other RANs and one or more other core networks. For example, in an EPS, the NG-RAN 135 may be replaced by an E-UTRAN containing eNBs and the 5GC 140 may be replaced by an EPC containing a Mobility Management Entity (MME) in place of the AMF 115, an E-SMLC in place of the LMF 120, and a GMLC that may be similar to the GMLC 125. In such an EPS, the E-SMLC may use LPPa in place of NRPPa to send and receive location information to and from the eNBs in the E-UTRAN and may use LPP to support positioning of the UE 105. In these other embodiments, positioning of the UE 105 using directional PRSs may be supported in an analogous manner to that described herein for a 5G network with the difference that functions and procedures described herein for the gNBs 110a, 110b, the ng-eNB 114, the AMF 115, and the LMF 120 may, in some cases, apply instead to other network elements such eNBs, WiFi APs, an MME, and an E-SMLC.

As noted, in some embodiments, positioning functionality may be implemented, at least in part, using the directional SS beams, sent by base stations (such as the gNBs 110a, 110b, and/or the ng-eNB 114) that are within range of the UE whose position is to be determined (e.g., the UE 105 of FIG. 1). The UE may, in some instances, use the directional SS beams from a plurality of base stations (such as the gNBs 110a, 110b, the ng-eNB 114, etc.) to compute the UE's position.

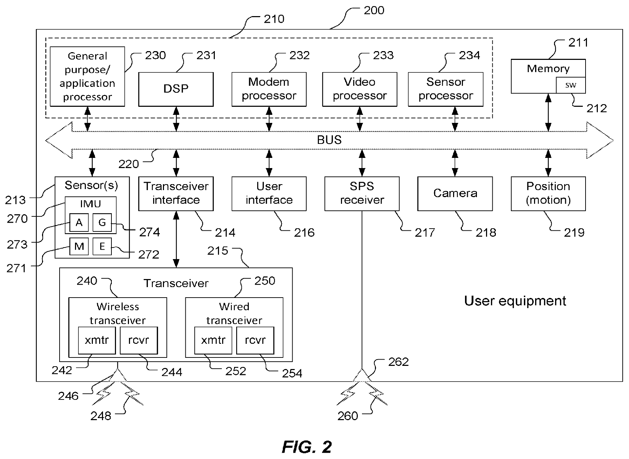

Referring also to FIG. 2, a UE 200 is an example of the UE 105 and comprises a computing platform including a processor 210, memory 211 including software (SW) 212, one or more sensors 213, a transceiver interface 214 for a transceiver 215 (that includes a wireless transceiver 240 and/or a wired transceiver 250), a user interface 216, a Satellite Positioning System (SPS) receiver 217, a camera 218, and a position (motion) device 219. The processor 210, the memory 211, the sensor(s) 213, the transceiver interface 214, the user interface 216, the SPS receiver 217, the camera 218, and the position (motion) device 219 may be communicatively coupled to each other by a bus 220 (which may be configured, e.g., for optical and/or electrical communication). One or more of the shown apparatus (e.g., the camera 218, the position (motion) device 219, and/or one or more of the sensor(s) 213, etc.) may be omitted from the UE 200. The processor 210 may include one or more intelligent hardware devices, e.g., a central processing unit (CPU), a microcontroller, an application specific integrated circuit (ASIC), etc. The processor 210 may comprise multiple processors including a general-purpose/ application processor 230, a Digital Signal Processor (DSP) 231, a modem processor 232, a video processor 233, and/or a sensor processor 234. One or more of the processors 230-234 may comprise multiple devices (e.g., multiple processors). For example, the sensor processor 234 may comprise, e.g., processors for radio frequency (RF) sensing (with one or more wireless signals transmitted and reflection(s) used to identify, map and/or track an object) and/or, ultrasound, etc. The modem processor 232 may support dual SIM/dual connectivity (or even more SIMs). For example, a SIM (Subscriber Identity Module or Subscriber Identification Module) may be used by an Original Equipment Manufacturer (OEM), and another SIM may be used by an end user of the UE 200 for connectivity. The memory 211 is a non-transitory storage medium that may include random access memory (RAM), flash memory, disc memory, and/or read-only memory (ROM), etc. The memory 211 stores the software 212 which may be processor-readable, processor-executable software code containing instructions that are configured to, when executed, cause the processor 210 to perform various functions described herein. Alternatively, the software 212 may not be directly executable by the processor 210 but may be configured to cause the processor 210, e.g., when compiled and executed, to perform the functions. The description may refer to the processor 210 performing a function, but this includes other implementations such as where the processor 210 executes software and/or firmware. The description may refer to the processor 210 performing a function as shorthand for one or more of the processors 230-234 performing the function. The description may refer to the UE 200 performing a function as shorthand for one or more appropriate components of the UE 200 performing the function. The processor 210 may include a memory with stored instructions in addition to and/or instead of the memory 211. Functionality of the processor 210 is discussed more fully below.

The configuration of the UE 200 shown in FIG. 2 is an example and not limiting of the disclosure, including the claims, and other configurations may be used. For example, an example configuration of the UE includes one or more of the processors 230-234 of the processor 210, the memory 211, and the wireless transceiver 240. Other example configurations include one or more of the processors 230-234 of the processor 210, the memory 211, the wireless transceiver 240, and one or more of the sensor(s) 213, the user interface 216, the SPS receiver 217, the camera 218, the PMD 219, and/or the wired transceiver 250.

The UE 200 may comprise the modem processor 232 that may be capable of performing baseband processing of signals received and down-converted by the transceiver 215 and/or the SPS receiver 217. The modem processor 232 may perform baseband processing of signals to be upconverted for transmission by the transceiver 215. Also or alternatively, baseband processing may be performed by the processor 230 and/or the DSP 231. Other configurations, however, may be used to perform baseband processing.

The UE 200 may include the sensor(s) 213 that may include, for example, an Inertial Measurement Unit (IMU) 270, one or more magnetometers 271, and/or one or more environment sensors 272. The IMU 270 may comprise one or more inertial sensors, for example, one or more accelerometers 273 (e.g., collectively responding to acceleration of the UE 200 in three dimensions) and/or one or more gyroscopes 274. The magnetometer(s) may provide measurements to determine orientation (e.g., relative to magnetic north and/or true north) that may be used for any of a variety of purposes, e.g., to support one or more compass applications. The environment sensor(s) 272 may comprise, for example, one or more temperature sensors, one or more barometric pressure sensors, one or more ambient light sensors, one or more camera imagers, and/or one or more microphones, etc. The sensor(s) 213 may generate analog and/or digital signals indications of which may be stored in the memory 211 and processed by the DSP 231 and/or the processor 230 in support of one or more applications such as, for example, applications directed to positioning and/or navigation operations.

The sensor(s) 213 may be used in relative location measurements, relative location determination, motion determination, etc. Information detected by the sensor(s) 213 may be used for motion detection, relative displacement, dead reckoning, sensor-based location determination, and/or sensor-assisted location determination. The sensor(s) 213 may be useful to determine whether the UE 200 is fixed (stationary) or mobile and/or whether to report certain useful information to the LMF 120 regarding the mobility of the UE 200. For example, based on the information obtained/measured by the sensor(s) 213, the UE 200 may notify/report to the LMF 120 that the UE 200 has detected movements or that the UE 200 has moved, and report the relative displacement/distance (e.g., via dead reckoning, or sensor-based location determination, or sensor-assisted location determination enabled by the sensor(s) 213). In another example, for relative positioning information, the sensors/IMU can be used to determine the angle and/or orientation of the other device with respect to the UE 200, etc.

The IMU 270 may be configured to provide measurements about a direction of motion and/or a speed of motion of the UE 200, which may be used in relative location determination. For example, the one or more accelerometers 273 and/or the one or more gyroscopes 274 of the IMU 270 may detect, respectively, a linear acceleration and a speed of rotation of the UE 200. The linear acceleration and speed of rotation measurements of the UE 200 may be integrated over time to determine an instantaneous direction of motion as well as a displacement of the UE 200. The instantaneous direction of motion and the displacement may be integrated to track a location of the UE 200. For example, a reference location of the UE 200 may be determined, e.g., using the SPS receiver 217 (and/or by some other means) for a moment in time and measurements from the accelerometer(s) 273 and gyroscope(s) 274 taken after this moment in time may be used in dead reckoning to determine present location of the UE 200 based on movement (direction and distance) of the UE 200 relative to the reference location.

The magnetometer(s) 271 may determine magnetic field strengths in different directions which may be used to determine orientation of the UE 200. For example, the orientation may be used to provide a digital compass for the UE 200. The magnetometer(s) 271 may include a two-dimensional magnetometer configured to detect and provide indications of magnetic field strength in two orthogonal dimensions. Also or alternatively, the magnetometer(s) 271 may include a three-dimensional magnetometer configured to detect and provide indications of magnetic field strength in three orthogonal dimensions. The magnetometer(s) 271 may provide means for sensing a magnetic field and providing indications of the magnetic field, e.g., to the processor 210.

The transceiver 215 may include a wireless transceiver 240 and a wired transceiver 250 configured to communicate with other devices through wireless connections and wired connections, respectively. For example, the wireless transceiver 240 may include a transmitter 242 and receiver 244 coupled to one or more antennas 246 for transmitting (e.g., on one or more uplink channels and/or one or more sidelink channels) and/or receiving (e.g., on one or more downlink channels and/or one or more sidelink channels) wireless signals 248 and transducing signals from the wireless signals 248 to wired (e.g., electrical and/or optical) signals and from wired (e.g., electrical and/or optical) signals to the wireless signals 248. Thus, the transmitter 242 may include multiple transmitters that may be discrete components or combined/integrated components, and/or the receiver 244 may include multiple receivers that may be discrete components or combined/integrated components. The wireless transceiver 240 may be configured to communicate signals (e.g., with TRPs and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-Vehicle-to-Everything (V2X) (PC5), Vehicle-to-Cell (V2C) (Uu), IEEE 802.11 (including IEEE 802.11p), WiFi, WiFi Direct (WiFi-D), Bluetooth^{®}, Zigbee etc. New Radio may use mm-wave frequencies and/or sub-6GHz frequencies. The wired transceiver 250 may include a transmitter 252 and a receiver 254 configured for wired communication, e.g., a network interface that may be utilized to communicate with the network 135 to send communications to, and receive communications from, the gNB 110a, for example. The transmitter 252 may include multiple transmitters that may be discrete components or combined/integrated components, and/or the receiver 254 may include multiple receivers that may be discrete components or combined/integrated components. The wired transceiver 250 may be configured, e.g., for optical communication and/or electrical communication. The transceiver 215 may be communicatively coupled to the transceiver interface 214, e.g., by optical and/or electrical connection. The transceiver interface 214 may be at least partially integrated with the transceiver 215.

The user interface 216 may comprise one or more of several devices such as, for example, a speaker, microphone, display device, vibration device, keyboard, touch screen, etc. The user interface 216 may include more than one of any of these devices. The user interface 216 may be configured to enable a user to interact with one or more applications hosted by the UE 200. For example, the user interface 216 may store indications of analog and/or digital signals in the memory 211 to be processed by DSP 231 and/or the general-purpose processor 230 in response to action from a user. Similarly, applications hosted on the UE 200 may store indications of analog and/or digital signals in the memory 211 to present an output signal to a user. The user interface 216 may include an audio input/output (I/O) device comprising, for example, a speaker, a microphone, digital-to-analog circuitry, analog-to-digital circuitry, an amplifier and/or gain control circuitry (including more than one of any of these devices). Other configurations of an audio I/O device may be used. Also or alternatively, the user interface 216 may comprise one or more touch sensors responsive to touching and/or pressure, e.g., on a keyboard and/or touch screen of the user interface 216.

The SPS receiver 217 (e.g., a Global Positioning System (GPS) receiver) may be capable of receiving and acquiring SPS signals 260 via an SPS antenna 262. The antenna 262 is configured to transduce the wireless SPS signals 260 to wired signals, e.g., electrical or optical signals, and may be integrated with the antenna 246. The SPS receiver 217 may be configured to process, in whole or in part, the acquired SPS signals 260 for estimating a location of the UE 200. For example, the SPS receiver 217 may be configured to determine location of the UE 200 by trilateration using the SPS signals 260. The general-purpose processor 230, the memory 211, the DSP 231 and/or one or more specialized processors (not shown) may be utilized to process acquired SPS signals, in whole or in part, and/or to calculate an estimated location of the UE 200, in conjunction with the SPS receiver 217. The memory 211 may store indications (e.g., measurements) of the SPS signals 260 and/or other signals (e.g., signals acquired from the wireless transceiver 240) for use in performing positioning operations. The general-purpose processor 230, the DSP 231, and/or one or more specialized processors, and/or the memory 211 may provide or support a location engine for use in processing measurements to estimate a location of the UE 200.

The UE 200 may include the camera 218 for capturing still or moving imagery. The camera 218 may comprise, for example, an imaging sensor (e.g., a charge coupled device or a CMOS imager), a lens, analog-to-digital circuitry, frame buffers, etc. Additional processing, conditioning, encoding, and/or compression of signals representing captured images may be performed by the general-purpose processor 230 and/or the DSP 231. Also or alternatively, the video processor 233 may perform conditioning, encoding, compression, and/or manipulation of signals representing captured images. The video processor 233 may decode/decompress stored image data for presentation on a display device (not shown), e.g., of the user interface 216.

The position (motion) device (PMD) 219 may be configured to determine a position and possibly motion of the UE 200. For example, the PMD 219 may communicate with, and/or include some or all of, the SPS receiver 217. The PMD 219 may also or alternatively be configured to determine location of the UE 200 using terrestrial-based signals (e.g., at least some of the signals 248) for trilateration, for assistance with obtaining and using the SPS signals 260, or both. The PMD 219 may be configured to use one or more other techniques (e.g., relying on the UE's self-reported location (e.g., part of the UE's position beacon)) for determining the location of the UE 200, and may use a combination of techniques (e.g., SPS and terrestrial positioning signals) to determine the location of the UE 200. The PMD 219 may include one or more of the sensors 213 (e.g., gyroscope(s), accelerometer(s), magnetometer(s), etc.) that may sense orientation and/or motion of the UE 200 and provide indications thereof that the processor 210 (e.g., the processor 230 and/or the DSP 231) may be configured to use to determine motion (e.g., a velocity vector and/or an acceleration vector) of the UE 200. The PMD 219 may be configured to provide indications of uncertainty and/or error in the determined position and/or motion. Functionality of the PMD 219 may be provided in a variety of manners and/or configurations, e.g., by the general purpose/application processor 230, the transceiver 215, the SPS receiver 217, and/or another component of the UE 200, and may be provided by hardware, software, firmware, or various combinations thereof.

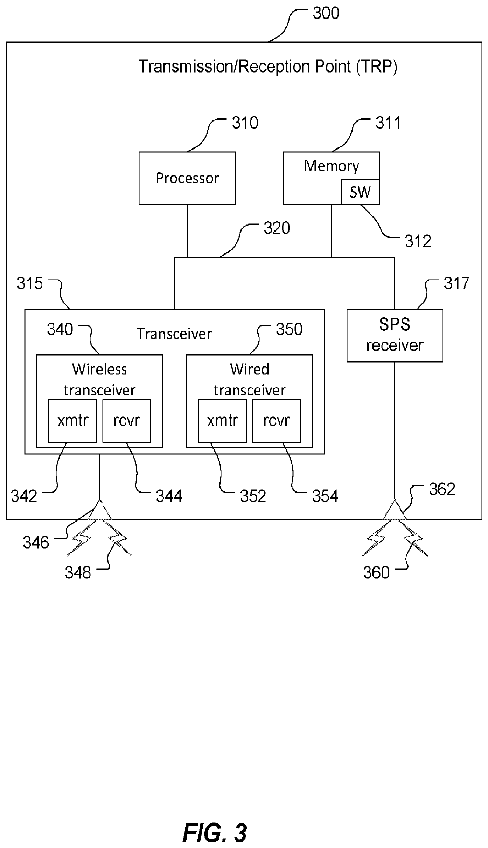

Referring also to FIG. 3, an example of a TRP 300 of the BSs 110a, 110b, 114 comprises a computing platform including a processor 310, memory 311 including software (SW) 312, a transceiver 315, and (optionally) an SPS receiver 317. The processor 310, the memory 311, the transceiver 315, and the SPS receiver 317 may be communicatively coupled to each other by a bus 320 (which may be configured, e.g., for optical and/or electrical communication). One or more of the shown apparatus (e.g., a wireless interface and/or the SPS receiver 317) may be omitted from the TRP 300. The SPS receiver 317 may be configured similarly to the SPS receiver 217 to be capable of receiving and acquiring SPS signals 360 via an SPS antenna 362. The processor 310 may include one or more intelligent hardware devices, e.g., a central processing unit (CPU), a microcontroller, an application specific integrated circuit (ASIC), etc. The processor 310 may comprise multiple processors (e.g., including a general-purpose/ application processor, a DSP, a modem processor, a video processor, and/or a sensor processor as shown in FIG. 2). The memory 311 is a non-transitory storage medium that may include random access memory (RAM)), flash memory, disc memory, and/or read-only memory (ROM), etc. The memory 311 stores the software 312 which may be processor-readable, processor-executable software code containing instructions that are configured to, when executed, cause the processor 310 to perform various functions described herein. Alternatively, the software 312 may not be directly executable by the processor 310 but may be configured to cause the processor 310, e.g., when compiled and executed, to perform the functions. The description may refer to the processor 310 performing a function, but this includes other implementations such as where the processor 310 executes software and/or firmware. The description may refer to the processor 310 performing a function as shorthand for one or more of the processors contained in the processor 310 performing the function. The description may refer to the TRP 300 performing a function as shorthand for one or more appropriate components of the TRP 300 (and thus of one of the BSs 110a, 110b, 114) performing the function. The processor 310 may include a memory with stored instructions in addition to and/or instead of the memory 311. Functionality of the processor 310 is discussed more fully below.

The transceiver 315 may include a wireless transceiver 340 and a wired transceiver 350 configured to communicate with other devices through wireless connections and wired connections, respectively. For example, the wireless transceiver 340 may include a transmitter 342 and receiver 344 coupled to one or more antennas 346 for transmitting (e.g., on one or more uplink channels and/or one or more downlink channels) and/or receiving (e.g., on one or more downlink channels and/or one or more uplink channels) wireless signals 348 and transducing signals from the wireless signals 348 to wired (e.g., electrical and/or optical) signals and from wired (e.g., electrical and/or optical) signals to the wireless signals 348. Thus, the transmitter 342 may include multiple transmitters that may be discrete components or combined/integrated components, and/or the receiver 344 may include multiple receivers that may be discrete components or combined/integrated components. The wireless transceiver 340 may be configured to communicate signals (e.g., with the UE 200, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), IEEE 802.11 (including IEEE 802.11p), WiFi, WiFi Direct (WiFi-D), Bluetooth^{®}, Zigbee etc. The wired transceiver 350 may include a wired transmitter 352 and a wired receiver 354 configured for wired communication, e.g., with the network 140 to send communications to, and receive communications from, the LMF 120, for example. The transmitter 352 may include multiple transmitters that may be discrete components or combined/integrated components, and/or the receiver 354 may include multiple receivers that may be discrete components or combined/integrated components. The wired transceiver 350 may be configured, e.g., for optical communication and/or electrical communication.

The configuration of the TRP 300 shown in FIG. 3 is an example and not limiting of the disclosure, including the claims, and other configurations may be used. For example, the description herein discusses that the TRP 300 is configured to perform or performs several functions, but one or more of these functions may be performed by the LMF 120 and/or the UE 200 (i.e., the LMF 120 and/or the UE 200 may be configured to perform one or more of these functions).

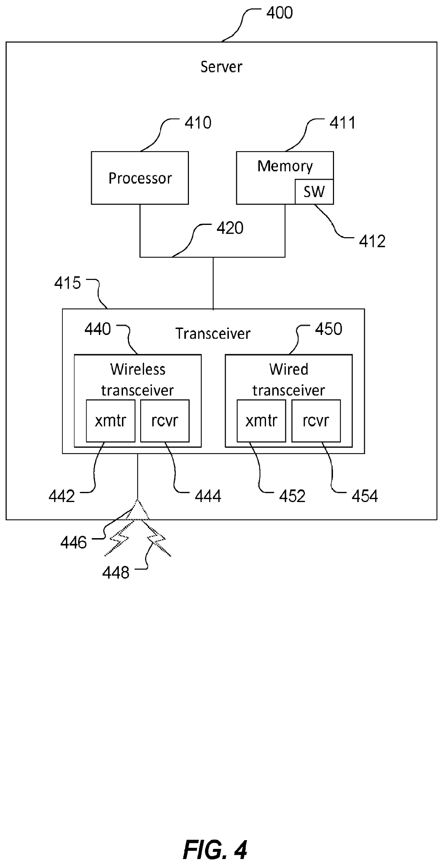

Referring also to FIG. 4, an example of the LMF 120 comprises a computing platform including a processor 410, memory 411 including software (SW) 412, and a transceiver 415. The processor 410, the memory 411, and the transceiver 415 may be communicatively coupled to each other by a bus 420 (which may be configured, e.g., for optical and/or electrical communication). One or more of the shown apparatus (e.g., a wireless interface) may be omitted from the server 400. The processor 410 may include one or more intelligent hardware devices, e.g., a central processing unit (CPU), a microcontroller, an application specific integrated circuit (ASIC), etc. The processor 410 may comprise multiple processors (e.g., including a general-purpose/ application processor, a DSP, a modem processor, a video processor, and/or a sensor processor as shown in FIG. 2). The memory 411 is a non-transitory storage medium that may include random access memory (RAM)), flash memory, disc memory, and/or read-only memory (ROM), etc. The memory 411 stores the software 412 which may be processor-readable, processor-executable software code containing instructions that are configured to, when executed, cause the processor 410 to perform various functions described herein. Alternatively, the software 412 may not be directly executable by the processor 410 but may be configured to cause the processor 410, e.g., when compiled and executed, to perform the functions. The description may refer to the processor 410 performing a function, but this includes other implementations such as where the processor 410 executes software and/or firmware. The description may refer to the processor 410 performing a function as shorthand for one or more of the processors contained in the processor 410 performing the function. The description may refer to the server 400 (or the LMF 120) performing a function as shorthand for one or more appropriate components of the server 400 (e.g., the LMF 120) performing the function. The processor 410 may include a memory with stored instructions in addition to and/or instead of the memory 411. Functionality of the processor 410 is discussed more fully below.

The transceiver 415 may include a wireless transceiver 440 and a wired transceiver 450 configured to communicate with other devices through wireless connections and wired connections, respectively. For example, the wireless transceiver 440 may include a transmitter 442 and receiver 444 coupled to one or more antennas 446 for transmitting (e.g., on one or more downlink channels) and/or receiving (e.g., on one or more uplink channels) wireless signals 448 and transducing signals from the wireless signals 448 to wired (e.g., electrical and/or optical) signals and from wired (e.g., electrical and/or optical) signals to the wireless signals 448. Thus, the transmitter 442 may include multiple transmitters that may be discrete components or combined/integrated components, and/or the receiver 444 may include multiple receivers that may be discrete components or combined/integrated components. The wireless transceiver 440 may be configured to communicate signals (e.g., with the UE 200, one or more other UEs, and/or one or more other devices) according to a variety of radio access technologies (RATs) such as 5G New Radio (NR), GSM (Global System for Mobiles), UMTS (Universal Mobile Telecommunications System), AMPS (Advanced Mobile Phone System), CDMA (Code Division Multiple Access), WCDMA (Wideband CDMA), LTE (Long-Term Evolution), LTE Direct (LTE-D), 3GPP LTE-V2X (PC5), IEEE 802.11 (including IEEE 802.11p), WiFi, WiFi Direct (WiFi-D), Bluetooth^{®}, Zigbee etc. The wired transceiver 450 may include a transmitter 452 and a receiver 454 configured for wired communication, e.g., with the network 135 to send communications to, and receive communications from, the TRP 300, for example. The transmitter 452 may include multiple transmitters that may be discrete components or combined/integrated components, and/or the receiver 454 may include multiple receivers that may be discrete components or combined/integrated components. The wired transceiver 450 may be configured, e.g., for optical communication and/or electrical communication.

The configuration of the server 400 shown in FIG. 4 is an example and not limiting of the disclosure, including the claims, and other configurations may be used. For example, the wireless transceiver 440 may be omitted. Also or alternatively, the description herein discusses that the server 400 is configured to perform or performs several functions, but one or more of these functions may be performed by the TRP 300 and/or the UE 200 (i.e., the TRP 300 and/or the UE 200 may be configured to perform one or more of these functions).

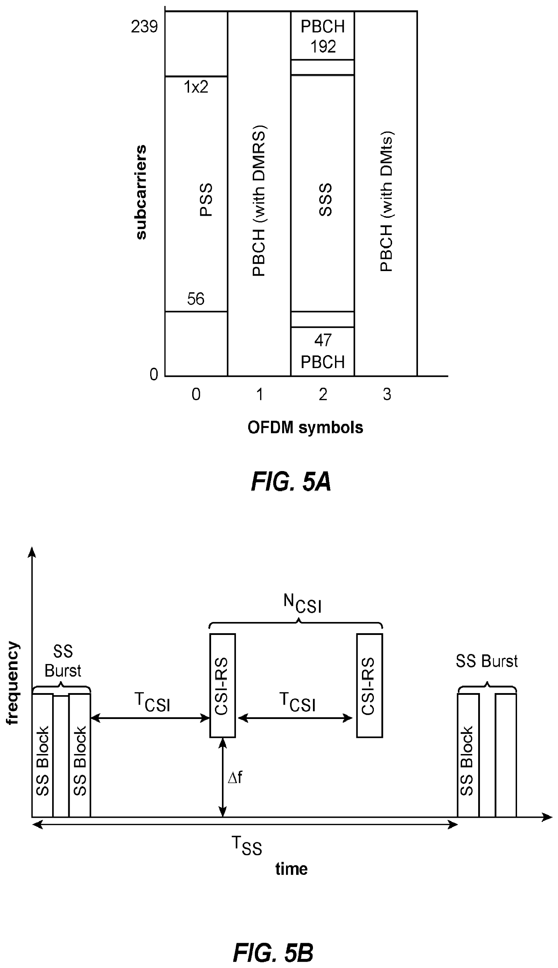

Referring to FIG. 5A, an example synchronization signal in a 5G NR wireless network is shown. The Synchronization Signal and Physical Broadcast Channel (PBCH) block (SSB / SS Block) may include a primary and a secondary synchronization signals (PSS, SSS), each occupying 1 symbol and 127 subcarriers, and PBCH spanning across 3 OFDM symbols and 240 subcarriers. The periodicity of the SSB can be configured by the network and the time locations where SSB can be sent are determined by sub-carrier spacing. Within the frequency span of a carrier, multiple SSBs can be transmitted. The Physical Cell Identifiers (PCIs) of the SSBs do not have to be unique, i.e. different SSBs can have different PCIs.

In some versions of the 3GPP specifications (e.g., 3GPP "NR and NG-RAN Overall Description - Rel. 15," TS 38.300, 2018), the concept of SSB and burst emerged for periodic synchronization signal transmission from the TRP 300. An SS block may be a group of 4 OFDM symbols in time and 240 subcarriers in frequency (i.e., 20 resource blocks), as shown in FIG 2. The SS block may carry the PSS, the SSS and the PBCH. A Demodulation Reference Signal (DMRS) associated with the PBCH may be used to estimate the Reference Signal Received Power (RSRP) of the SS block. In a slot of 14 symbols, there are two possible locations for SS blocks: symbols 2-5 and symbols 8-11. The SS blocks may be grouped into the first 5 ms of an SS burst, which can have different periodicities TSS. For example, the value of TSS may be on the order of 5, 10, 20, 40, 80, or 160 ms. When accessing the network for the first time, a UE 200 may assume a periodicity TSS = 20 ms. When considering frequencies for which beam operations are required, each SS block may be mapped to a certain angular direction. To reduce the impact of SS transmissions, SS may be sent through wide beams, while data transmission for the active UE may usually be performed through narrow beams, to increase the gain produced by beamforming.

In an embodiment, CSI-RSs may be used for Radio Resource Management (RRM) measurements for mobility management purposes in connected mode. For example, it may be possible to configure multiple CSI-RS to the same SS burst, in such a way that a UE 200 may first obtain synchronization with a given cell using the SS bursts, and then use that as a reference to search for CSI-RS resources. The CSI-RS measurement window configuration may contain at least the periodicity and time/frequency offsets relative to the associated SS burst. Referring to FIG. 5B, an example CSI-RS periodicity configuration in a 5G NR wireless network is shown. SS blocks may be sent every TSS ms, and they embed time and frequency offsets indicating the time and frequency allocation of CSI-RS signals within the frame structure. As depicted, a CSI-RS signal may be sent TCSI ms after the end of an SS burst. In general, in a 5G NR network, the best directions for the beams of the transceiver need to be periodically identified (e.g., through beam search operations), in order to maintain the alignment between the communicating nodes. In an example, SS- and CSI-based measurement results can be jointly used to reflect the different coverage which can be achieved through different beamforming architectures.

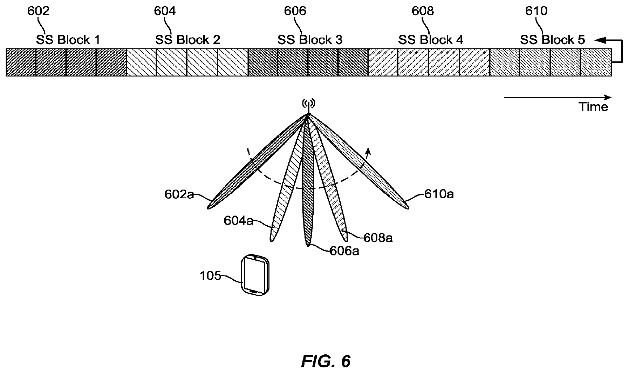

Referring to FIG. 6, a conceptual diagram of directional beams transmitted from a base station based on a synchronization signal (SS) burst is shown. The SS Burst includes a plurality of SS blocks such as a first SS Block 602, a second SS Block 604, a third SS Block 606, a fourth SS block 608 and a fifth SS Block 610. An SS burst may include additional SS blocks. As discussed above, each SS block 602, 604, 606, 608, 610 may be mapped to an angular direction and a specific beam ID. For example, the first SS block 602 is mapped to a first beam 602a with a beam identification value (e.g., index) of 1, the second SS block 604 is mapped to a second beam 604a with a beam identification value of 2, the third SS block 606 is mapped to a third beam 606a with a beam identification value of 3, the fourth SS block 608 is mapped to a fourth beam 608a with a beam identification value of 4, and the fifth SS block 610 is mapped to a fifth beam 610a with a beam identification value of 5. During an initial signal acquisition procedure, a UE 105 may receive one or more beam identification values from base stations (e.g., a TRP 300) in a wireless network. Once the UE 105 receives a beam from a particular base station, the UE may be configured to map the received beam identification value and a cell identification based on a codebook. For example, when the UE 105 receives the second beam 604a with the beam identification value of 2 (i.e., associated with SS Block 2), the UE may be configured to reference a codebook (e.g., a data structure) with the beam identification value to determine the angular information associated with the second beam 604a. In an example, the UE 105 may report the beam identification back to a network node configured to determine the angular information based on a codebook (i.e., stored remote from the UE). In general, there may be a one-to-one mapping between a beam identification value (e.g., a SSB ID) with a spatial angle of the transmitted beam. One or more data structures such as a codebook (e.g., data table) located on a network node and/or the UE may be used to determine the angular direction of the transmitted beam based on the beam identification value. In an example, the UE 105 may receive assistance data from a network including timing and SSB ID information associated with the directional beams transmitted from a TRP 300.

The SS and CSI signals may be utilized as part of mobility functions to ensure the network 100 can maintain service continuity with the UE 105. In an RRC connected mode, the UE 105 may be configured with measurements based on RRM resources such as SS, CRS and TRS to provide the network input on the signal strength or interference level the UE 105 experiences. Subsequent procedures such as cell handover and RRC connection changes may be based on these RRM measurements. In general, the RRM measurements may be RSRQ, RSRP, and/or SINR (signal-to-interference-plus-noise) values measured from serving and neighbor cells reference signals (e.g., SS/PBCH block(s) or CSI-RS). In prior systems, the RRM measurements are configured by the network via RRC and a UE is configured to measure the reference signals based on the time-frequency locations received from the network. In the techniques described herein, however, the UE is configured to utilize positioning assistance data to constrain the list of stations based on the location and direction of motion of the UE.

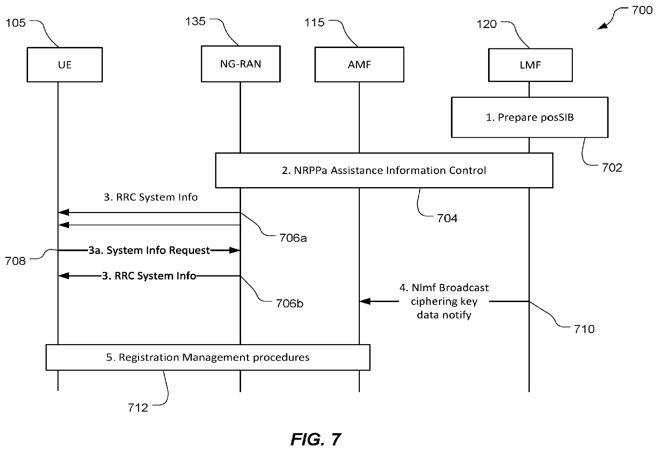

Referring to FIG. 7, an example message flow 700 for the broadcast of positioning assistance data is shown. The message flow 700 may be implemented by the communication system 100. In an example, the LMF 120, the AMF 115 and the NG-RAN 135 may be configured to provide positioning assistance data to the UE 105. The UE 105 may include some or all of the components of the UE 200, and the UE 200 is an example of the UE 105. The NG-RAN 135 may include one or more TRPs 300, such as the gNBs 110a-b and the ng-eNB 114. In general, the LMF 120 may be configured to utilize existing network interfaces and protocols to provide positioning assistance data to UEs in the communication system 100. For example, the positioning assistance data may be included in positioning system information blocks (posSIBs) which may be broadcast periodically from one or more stations in the NG-RAN 135. In an example, the posSIBs may be broadcast on-demand (e.g., based on a request from a UE), or sent in a dedicated manner to a UE in an RRC_CONNECTED mode (e.g., based upon a request from a UE). The posSIB may include positioning reference signal (PRS) configuration information for the TRPs. For example, the PRS resource sets may include PRS information elements such as PRS resource identifier (ID), sequence ID, comb size-N, resource element offset in the frequency domain, starting slot and starting symbol, number of symbols per PRS resource (i.e., the duration of the PRS resource), beam azimuth and elevation, QCL information (e.g., QCL with other DL reference signals), and other parameters as defined by network standards. The positioning assistance data may include location information for the TRPs, and the RTD information associated with the TRPs. Different posSIBs may be defined for each positioning assistance data element. Ciphering information may also be provided to the UE to enable encrypted positioning assistance data (e.g., subscriber based) to be broadcast in a coverage area.

In operation, the LMF 120 may be configured to prepare one or more posSIBs and scheduling information at a first stage 702. The LMF 120 may be configured to cipher the assistance data and segment large assistance data elements. The LMF 120 may provide the posSIBs and scheduling information to the NG-RAN 135 via the AMF 115 in NRPPa assistance information control messages 704. In an example, one or more TRPs 300 in the NG-RAN 135 may be configured to broadcast the posSIBs via RRC system information messages 706a. In another example, the positioning assistance data may be provided on-demand and the UE 105 may send a system information request message 708 to a serving station. The serving station may then send the posSIBs in one or more RRC system information messages 706b. In an embodiment, the posSIBs may be encrypted and the LMF 120 may be configured to provide a ciphering key in a Nlmf broadcast ciphering key data notify message 710. The AMF 115 may be configured to provide the cipher key information to the UE 105 in registration management procedures 712 to enable the UE 105 to utilize the information in the posSIBs. The encryption enables a network operator to protect their proprietary information, such as TRP locations, and enable subscription based business methods utilizing user and/or user account information. The message flow 700 is an example, and not a limitation, as other messaging techniques may be used to provide positioning assistance data to a UE. For example, the communication system 100 may be configured to access the Internet and assistance data stored on third party location servers (e.g., web application servers) and the assistance data may be provided to the UE via internet and other data transfer protocols.

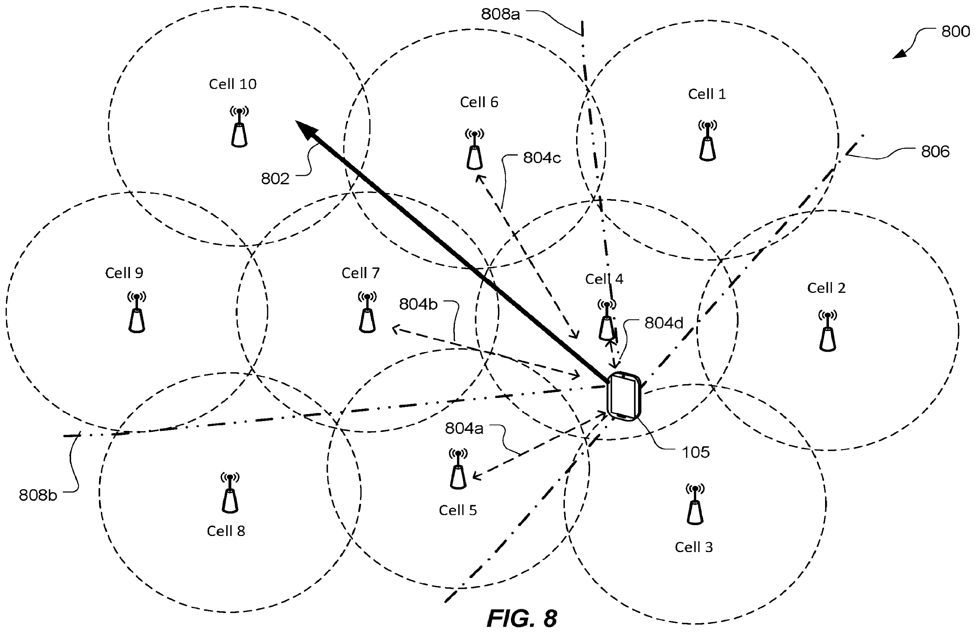

Referring to FIG. 8, a conceptual diagram 800 of a user equipment 105 moving on a trajectory 802 through a plurality of stations is shown. The UE 105 may be a mobile device disposed in a vehicle, or an integrated device such as an onboard vehicle computer in a vehicle-to-everything (V2X) environment. The stations labeled cells 1-10 in the diagram 800 may be base stations such a gNBs 110a-b, ng-eNB 114, or other networked macro, pico and/or femto TRPs. In a V2X application, the stations may include one or more Roadside Units (RSUs) configured to communicate with the UE 105 via device-to-device (D2D) sidelink protocols such as PC5. The UE 105 is configured for RRM and may obtain RRM mobility measurements with the stations. For example, the measurements may be performed either on the SS/PBCH block or the CSI-RS as described in FIGS. 5A, 5B and 6 above. The RRM measurements may include RSRP, RSRQ and SINR values for neighboring cells and detectable beams. The UE 105 may be configured to perform physical layer filtering (e.g., L1-filtering) to obtain a sufficient number of physical samples for accurate measurements. Further filtering (e.g., Layer 3 filtering) may also be used by UEs in a CONNECTED mode. The UE 105 is configured to track several neighboring cells and provide the network with the RRM measurements for each of the tracked cells and/or tracked beams.

In operation, the UE 105 obtains position assistance data including the locations of each of the stations. For example, the UE 105 may be configured to decode one or more posSIBs via the message flow 700. The UE 105 is also configured to determine its direction of motion along the trajectory 802. Various methods as known in the art may be used to determine the direction of motion for the UE 105. In an example, the UE 105 may utilize terrestrial positioning techniques such as OTDOA, RTT, E-CID, AOA, AOD, etc. to determine a current location and a direction of motion. Satellite navigation methods such as GNSS, GPS, Galileo, Beidou, etc. may also be used. In an example, the IMU 270 may be used to determine dead reckoning position estimates and a direction of the trajectory 802. In an example, the UE 105 may update a location and trajectory 802 on a periodic basis (e.g., 10ms, 100ms, 1 sec, 10sec, 1 min, 10 mins, etc.) and determine which stations to track based on the station location received in the assistance data. The period may be based on the speed of the UE 105. The UE 105 is configured to prioritize cells in the direction of motion (e.g., the trajectory 802) and deprioritize the cells that are located in the opposite direction. In an embodiment, the UE 105 may determine one or more tangent lines based on the direction of motion and evaluate the locations of the stations based on the tangent lines. For example, a first tangent line 806 may be perpendicular to the trajectory 802 and extending out from the current location of the UE 105. Stations on the forward side of the first tangent line 806, such as cell 1, cell 4, cell 5, cell 6, and cell 7 may be prioritized for RRM measurements, while stations on the back side of the first tangent line 806 may be deprioritized and the UE 105 may stop tracking those stations. For example, the UE 105 may stop tracking cell 2 and cell 3. In this use case, the UE 105 may obtain a first RRM measurement 804a with cell 5, a second RRM measurement 804b with cell 7, a third RRM measurement 804c with cell 6, and a fourth RRM measurement 804d with cell 4. Additional cells will be tracked and prioritized as the UE 105 proceeds along the trajectory 802, while the cells that fall behind as the tangent line 806 moves forward with the UE 105 will be deprioritized. In an example, the UE 105 may be configured to deprioritize the stations behind the first tangent line 806 after the RRM measurement value decreases. That is, the UE 105 may continue to track stations behind the first tangent line 806 until their respective RSRP, RSRQ, or SINR values begin to trend downward. Specific beam angles may also be prioritized such that the detectable beams on the forward side of the tangent line 806 and directed towards the UE 105 may be prioritized for RRM measurements.

Other tangent lines may also be used. For example, a second tangent line 808a and a third tangent line 808b may extend along relative bearings to the left and right of the trajectory 802. The second tangent line 808a may be at a relative angle of 045 and the third tangent line 808b may be at a relative angle of 315 from the direction of motion. Other angles may also be used. In an example, the tangent line angles may be based on the velocity of the UE 105 such that narrower angles may be used for higher speeds and wider angles may be used for lower speeds. The tangent lines 806, 808a-b are examples and not limitations. Other distance calculations may be used to determine the relative bearings and ranges between the UE 105 and the stations, and the UE 105 may be configured to prioritize cells and beams based on the computed bearings and range values relative to the trajectory 802. The prioritization of a limited number of stations enables the UE 105 to spend less time scanning for the respective SS Blocks and CSI-RS and thus save power because the scanning and decoding processes can be processor intensive. Further, the reduced scanning also reduces the reporting overhead because the UE 105 will not provide RRM measurements for stations which will be out of range as the UE 105 moves along the trajectory 802.

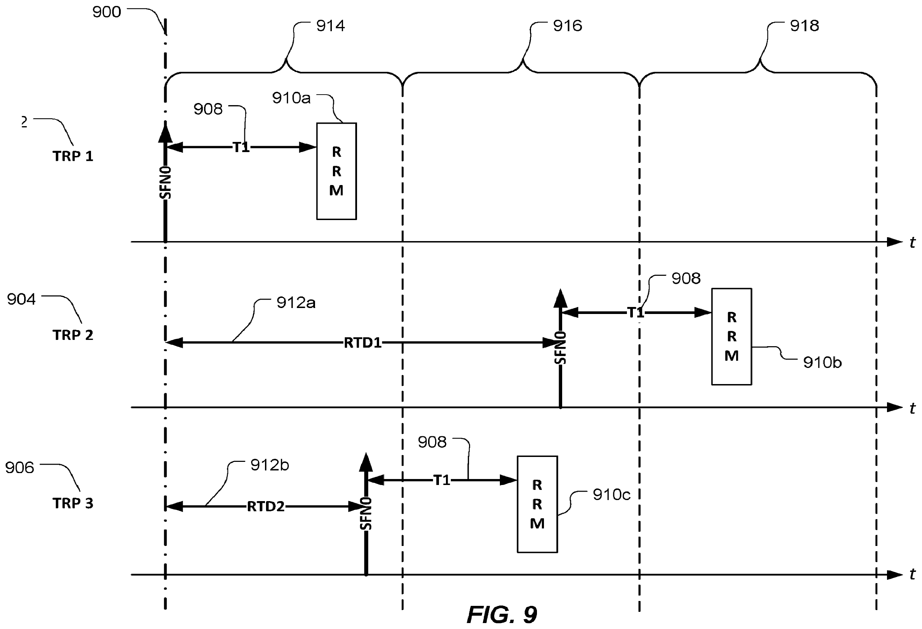

Referring to FIG. 9, timelines with example real time difference (RTD) values for different stations is shown. In general, a UE is configured to scan for RRM resources (e.g., SS Bursts, CSI-RS, TRS) on neighboring cells. The UE may utilize a correlation based process to search for neighbor cell timing. The correlation may be implemented in the frequency domain assuming the symbols in the RRM resources are roughly synchronized. The RRM resources may have fixed scheduling with respect to a system frame number (SNF). The fixed scheduling may be based on the TSS. For example, a first station 902, a second station 904, a third station 906 are configured to transmit RRM resources at a fixed time T1 908 measured from SFN0 as depicted in FIG. 9. The fixed time T1 908 may be a network configuration parameter an thus known by the network stations and UEs. The relative timing of the RRM transmissions, however, may vary between stations based on the RTD values associated with each of the stations. For example, a reference timeline origin 900 is depicted in FIG. 9 to illustrate the effect of the RTD value on the transmission times for the RRM resources. The timeline origin 900 may be based on a system time (e.g., a GNSS clock) and/or the frame timing associated with one of the network stations such as the first station 902. The first station 902 transmits a first RRM resource 910a after a time period equal to the time T1 908 from the timeline origin 900. The second station 904 transmits a second RRM resource 910b after a time period including the time T1 908 and a first RTD value 912a. The third station 906 transmits a third RRM resource 910c after a time period including the time T1 908 and a second RTD value 912b. In an example, the RTD values 912a-b associated with the stations 902, 904, 906 may be included in the posSIBs provided in the message flow 700. In another example, the UE may utilize the location information for the UE and the stations to determine effective RTD values observed at the UE. The observed RTD values may also account for propagation delays.

In operation, the UE 105 may be configured to utilize the RTD values to narrow the search time for the RRM resources. For example, the UE 105 may enable one or more search windows based on the timeline origin 900 such as a first search window 914, a second search window 916, and a third search window 918. The number and relative durations of the search windows 914, 916, 918 are examples and not limitations as other search window configurations may be used. In an example, each of the search windows 914, 916, 918 may be approximately 2-4 ms in duration and the UE 105 is configured to utilize a search window to measure the respective RRM resource. That is, the UE 105 may utilize the first search window 914 to measure the first RRM resource 910a, or the second search window 916 to measure the third RRM resource 910c, or the third search window 918 to measure the second RRM resource 910b. The search windows 914, 916, 918 reduce the amount of time the UE 105 must otherwise spend to search and decode the respective RRM resources. For example, without the RTD information and the corresponding search window divisions, a UE would be required to search for the second RRM resource 910b for approximately the entire duration of the TSS. The searching and decoding processes utilize processing cycles and the reduction of search time with the search windows conserves power. The benefits are particularly advantageous when the RRM-RS signals (e.g., CSI-RS) are multiplexed with other data channels and need to be processed in the frequency domain for each hypothesis.

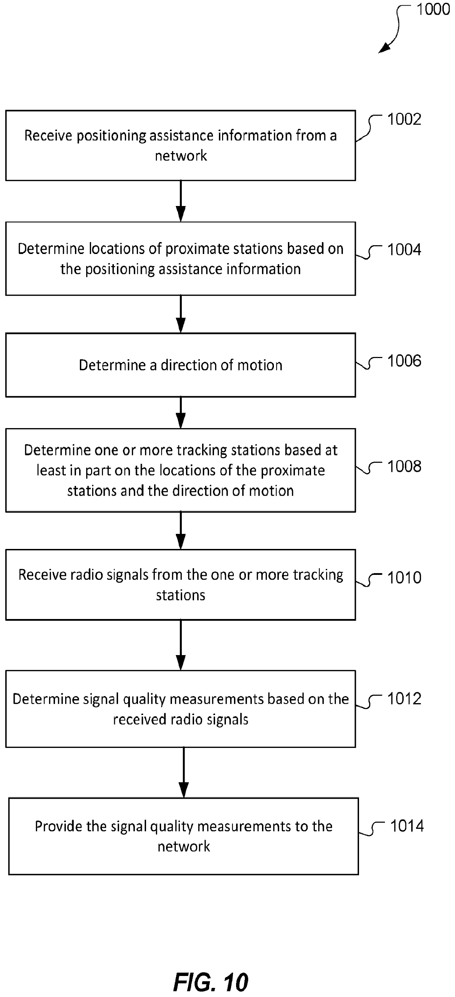

Referring to FIG. 10, with further reference to FIGS. 1-9, a method 1000 for providing signal measurements to a network includes the stages shown. The method 1000 is, however, an example and not limiting. The method 1000 may be altered, e.g., by having stages added, removed, rearranged, combined, performed concurrently, and/or having single stages split into multiple stages.

At stage 1002, the method includes receiving positioning assistance information from a network. A UE 200 such as the UE 105, including a processor 230 and a transceiver 215, is a means for receiving the positioning assistance information. In an example, the LMF 120 may generate positioning assistance information and scheduling information for the UE 105. The UE 105 may receive the positioning assistance information via the message flow 700. For example, a TRP 300 may broadcast posSIBs in RRC system information (SI) messages which may be broadcast periodically, or on-demand based on a request from the UE 105. Other dedicated messaging available in an RRC_CONNECTED state may be used. Other signaling and electronic messaging techniques may also be used. For example, the UE 105 may be configured to access a web server via an API to obtain assistance data. In an example, the positioning assistance data may be encrypted and the UE 105 may be configured to decrypt the positioning assistance information.

At stage 1004, the method includes determining locations of proximate stations based on the positioning assistance information. The UE 105, including a processor 230, is a means for determining the locations of proximate stations. The UE 105 is configured to determine a current location based on terrestrial and/or satellite positioning methods. For example, the UE 105 may utilize OTDOA, RTT, E-CID or other network techniques to determine a current location. The SPS receiver 217 may also be configured to provide location information. In an example, the IMU 270 may be used to determine a dead reckoning position based on a previous fix or lines of position. The assistance information received at stage 1002 includes the locations of neighboring cells and potentially cells and stations in an extended range from the current location of the UE 105. The UE 105 may compute a distance to each of the stations and select the stations within a predefined radius as the proximate stations. For example, stations with in 2, 5, 10 , 15 miles etc. may be classified as proximate stations.

At stage 1006, the method includes determining a direction of motion. The UE 105, including the processor 230, the transceiver 215, the SPS receiver 217, PMD 219, and/or the IMU 270, is a means for determining a direction of motion. The UE 105 may utilize terrestrial and/or satellite position estimates to determine a direction of motion. For example, two or more fixes may be used to estimate a direction and a speed. The IMU 270 may include gyroscopes and accelerometers and the UE 105 may be configured to determine the direction of motion based on the signals output from the IMU 270.

At stage 1008, the method includes determining one or more tracking stations based at least in part on the locations of the proximate stations and the direction of motion. The UE 105, including the processor 230 and the transceiver 215, is a means for determining the one or more tracking stations. As depicted in FIG. 8, in an example, the UE 105 may be configured to utilize one or more tangent lines to determine one or more tracking stations based on the tangent lines. For example, the first tangent line 806 may be perpendicular to the trajectory 802 and may extend out from the current location of the UE 105. Stations on the forward side of the first tangent line 806, such as cell 1, cell 4, cell 5, cell 6, and cell 7 may be selected as tracking stations for RRM measurements, while stations on the back side of the first tangent line 806 may be deselected as tracking stations (i.e., the UE 105 may stop tracking those stations). Other distance calculations may be used to determine the relative bearings and distances between the UE 105 and the stations, and the UE 105 may be configured to determine the tracking stations based on the computed bearings and distance values.

At stage 1010, the method includes receiving radio signals from the one or more tracking stations. The UE 105 is a means for receiving the radio signals. The UE 105 may be configured to scan for RRM resources including SS Bursts, CSI-RS, and TRS on the one or more tracking stations. In an example, the positioning assistance data may include RTD values for the one or more tracking stations and the UE 105 may be configured to search for the radio signals using search windows based on the RTD values.

At stage 1012, the method includes determining signal quality measurements based on the received radio signals. The UE 105, including the processor 230 and the transceiver 215, is a means for determining the signal quality measurements. The signal quality measurements are RRM measurements such as RSRQ, RSRP, and/or SINR for the SS Bursts or CSI-RS transmissions from the one or more tracking stations.

At stage 1014, the method includes providing the signal quality measurements to the network. The UE 105, including the processor 230 and the transceiver 215, is a means for providing the signal quality measurements. In an example, the UE 105 may utilize RRC or other messaging protocols to provide the signal quality measurements.

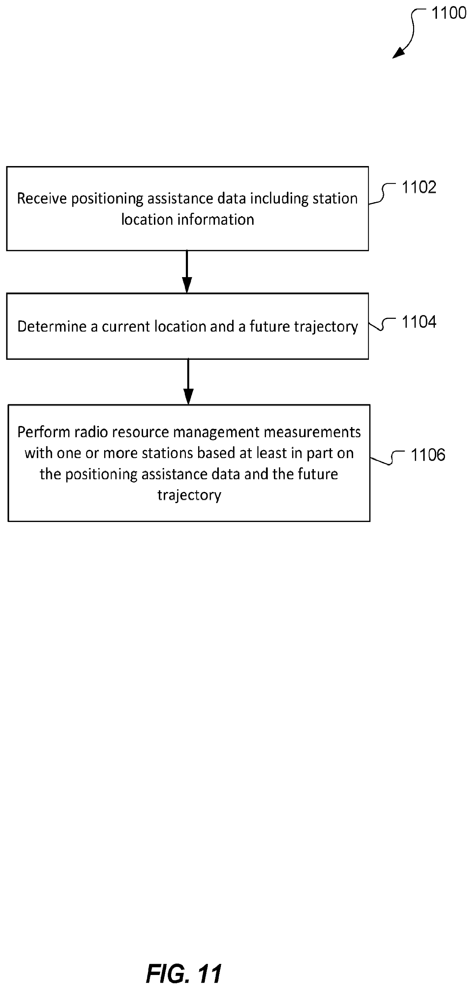

Referring to FIG. 11, with further reference to FIGS. 1-9, a method 1100 for performing radio resource management measurements includes the stages shown. The method 1100 is, however, an example and not limiting. The method 1100 may be altered, e.g., by having stages added, removed, rearranged, combined, performed concurrently, and/or having single stages split into multiple stages.

At stage 1102, the method includes receiving positioning assistance data including station location information. A UE 200 such as the UE 105, including the processor 230 and the transceiver 215, is a means for receiving positioning assistance data. In an example, the UE 105 may receive positioning assistance data from the network via RRC messaging or other signaling protocols. In an embodiment, the positioning assistance data may be stored locally on the UE 105 (i.e., in the memory 211) and the processor 230 may be configured to access the assistance data based on application requirements. The assistance data may be encrypted and the UE 105 may receive a cipher key to enable decryption of the assistance data. The positioning assistance data may also include, for example, PRS configuration information and RTD values for neighboring TRPs. As described in the message flow 700, the positioning assistance data may be included in one or more posSIBs broadcast or unicast from one or more TRPs.

At stage 1104, the method includes determining a current location and a future trajectory. The UE 105, including the processor 230, the transceiver 215, the SPS receiver 217, PMD 219, and/or the IMU 270, is a means for determining a current location and a future trajectory. The UE 105 is configured to determine a current location based on terrestrial and/or satellite positioning methods. For example, the UE 105 may utilize OTDOA, RTT, E-CID or other network techniques to determine a current location. The SPS receiver 217 may also be configured to provide location information. In an example, the IMU 270 may be used to determine a dead reckoning position based on a previous fix or lines of position. The UE 105 may also utilize terrestrial and/or satellite position estimates to determine a future trajectory. For example, two or more fixes may be used to estimate a direction and a speed and the future trajectory may be interpolated based on the direction and speed values. The UE 105 may also be configured to utilize signals generated from the IMU 270 to determine the future trajectory.

At stage 1106, the method includes performing radio resource management measurements with one or more stations based at least in part on the positioning assistance data and the future trajectory. The UE 105, including the processor 230 and the transceiver 215, is a means for performing RRM with one or more stations. The UE 105 is configured to classify the cell and/or beams it needs to track based on the direction of the trajectory. The UE 105 may prioritize cell and/or beams in its direction of motion rather than those that are opposite to its direction. For example, as depicted in FIG. 8, the UE 105 may be configured to utilize one or more tangent lines relative to the trajectory 802 to determine tracking stations based on the tangent lines. For example, the first tangent line 806 may be perpendicular to the trajectory 802 and may extend out from the current location of the UE 105. Stations on the forward side of the first tangent line 806 are selected at tracking stations for RRM measurements, while stations on the back side of the first tangent line 806 may be deselected as tracking stations (i.e., the UE 105 will not perform RRM measurements with those stations). Other distance calculations may be used to determine the relative bearings and distances between the UE 105 and the stations, and the UE 105 may be configured to determine the tracking stations based on the computed bearings and distance values. The RRM measurements may be RSRQ, RSRP, and/or SINR values measured from the SS/PBCH blocks and/or CSI-RS transmitted by the tracked stations. In an example, the UE 105 may be configured to perform the RRM measurements based on scan windows associated with RTD information for the respective tracked stations.

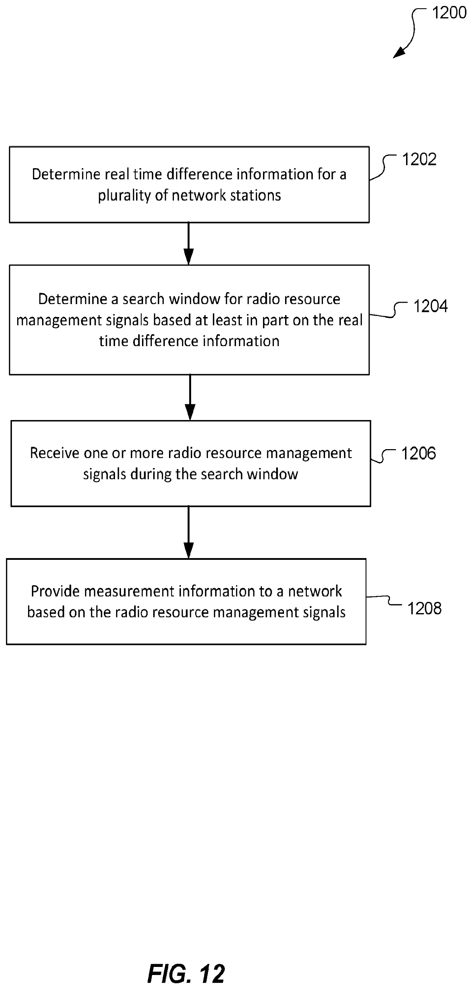

Referring to FIG. 12, with further reference to FIGS. 1-9, a method 1200 for obtaining radio resource management measurements in a search window includes the stages shown. The method 1200 is, however, an example and not limiting. The method 1200 may be altered, e.g., by having stages added, removed, rearranged, combined, performed concurrently, and/or having single stages split into multiple stages.

At stage 1202, the method includes determining real time difference information for a plurality of network stations. A UE 200 such as the UE 105, including the processor 230 and the transceiver 215, is a means for determining real time difference information. In an example, the UE 105 may receive positioning assistance data including RTD information via the message flow 700. For example, a TRP 300 may broadcast posSIBs including the RTD information in RRC system information (SI) messages which may be broadcast periodically, or on-demand based on a request from the UE 105. Other dedicated messaging available in an RRC_CONNECTED state may be used. Other signaling and electronic messaging techniques may also be used. For example, the UE 105 may be configured to access a web server via an API to obtain RTD information. In another example, the UE may utilize the location information for the UE and the stations to determine effective RTD values for the plurality of network stations as observed at the UE. The observed RTD values may also account for propagation delays.

At stage 1204, the method includes determining a search window for radio resource management signals based at least in part on the real time difference information. The UE 105, including the processor 230 and the transceiver 215, is a means for determining a search window for RRM signals. RRM signals such as SS Blocks, CSI-RS and TRS may have fixed scheduling with respect to a reference SFN. The relative timing of the RRM transmissions may vary between stations based on the RTD values associated with each of the stations. In an embodiment, the UE 105 is configured to decode the reference SFN boundaries for all the tracked cells and then decode the RRM signals. The UE 105 may enable one or more search windows based on a timeline origin. For example, referring to FIG. 9, example search windows may be staggered across a time period such as the first search window 914, the second search window 916, and the third search window 918. The number, duration, and relative locations of the search windows 914, 916, 918 are examples and not limitations as other search window configurations may be used. In an example, each of the search windows 914, 916, 918 may be approximately 2-4 ms in duration and the UE 105 is configured to utilize a search window to measure a respective RRM resource. In an example, a portion of the search windows may overlap with one another.

At stage 1206, the method includes receiving one or more radio resource management signals during the search window. The UE 105, including the processor 230 and the transceiver 215, is a means for receiving one or more RRM signals. The UE 105 is configured to scan for RRM resources including SS Bursts, CSI-RS, and TRS on one or more tracking stations during the respective scan windows. Referring to FIG. 9, as an example, the UE 105 may utilize the first search window 914 to measure the first RRM resource 910a on the first station 902, or the second search window 916 to measure the third RRM resource 910c on the third station 906, or the third search window 918 to measure the second RRM resource 910b on the second station 904.

At stage 1208, the method includes providing measurement information to a network based on the radio resource management signals. The UE 105, including the processor 230 and the transceiver 215, is a means for providing measurement information to the network. The measurement information may be signal quality measurements such as RSRQ, RSRP, and/or SINR for the RRM signals received at stage 1206. The UE 105 may be operating in an RRC_CONNECTED mode and may provide the measurement information to a serving cell via RRC messaging. Other signaling techniques may also be used to provide the RRM measurements to the network. For example, sidelink channels may be used to provide RRM measurement information to a network via an access point or RSU.

Other examples and implementations are within the scope of the disclosure and appended claims. For example, due to the nature of software and computers, functions described above can be implemented using software executed by a processor, hardware, firmware, hardwiring, or a combination of any of these. Features implementing functions may also be physically located at various positions, including being distributed such that portions of functions are implemented at different physical locations. For example, one or more functions, or one or more portions thereof, discussed above as occurring in the LMF 120 may be performed outside of the LMF 120 such as by the TRP 300.

Components, functional or otherwise, shown in the figures and/or discussed herein as being connected or communicating with each other are communicatively coupled unless otherwise noted. That is, they may be directly or indirectly connected to enable communication between them.

As used herein, unless otherwise stated, a statement that a function or operation is "based on" an item or condition means that the function or operation is based on the stated item or condition and may be based on one or more items and/or conditions in addition to the stated item or condition.

As used herein, the singular forms "a," "an," and "the" include the plural forms as well, unless the context clearly indicates otherwise. For example, "a processor" may include one processor or multiple processors. The terms "comprises," "comprising," "includes," and/or "including," as used herein, specify the presence of stated features, integers, steps, operations, elements, and/or components, but do not preclude the presence or addition of one or more other features, integers, steps, operations, elements, components, and/or groups thereof.

Also, as used herein, "or" as used in a list of items (possibly prefaced by "at least one of" or prefaced by "one or more of") indicates a disjunctive list such that, for example, a list of "at least one of A, B, or C," or a list of "one or more of A, B, or C" or a list of "A or B or C" means A, or B, or C, or AB (A and B), or AC (A and C), or BC (B and C), or ABC (i.e., A and B and C), or combinations with more than one feature (e.g., AA, AAB, ABBC, etc.). Thus, a recitation that an item, e.g., a processor, is configured to perform a function regarding at least one of A or B, or a recitation that an item is configured to perform a function A or a function B, means that the item may be configured to perform the function regarding A, or may be configured to perform the function regarding B, or may be configured to perform the function regarding A and B. For example, a phrase of "a processor configured to measure at least one of A or B" or "a processor configured to measure A or measure B" means that the processor may be configured to measure A (and may or may not be configured to measure B), or may be configured to measure B (and may or may not be configured to measure A), or may be configured to measure A and measure B (and may be configured to select which, or both, of A and B to measure). Similarly, a recitation of a means for measuring at least one of A or B includes means for measuring A (which may or may not be able to measure B), or means for measuring B (and may or may not be configured to measure A), or means for measuring A and B (which may be able to select which, or both, of A and B to measure). As another example, a recitation that an item, e.g., a processor, is configured to at least one of perform function X or perform function Y means that the item may be configured to perform the function X, or may be configured to perform the function Y, or may be configured to perform the function X and to perform the function Y. For example, a phrase of "a processor configured to at least one of measure X or measure Y" means that the processor may be configured to measure X (and may or may not be configured to measure Y), or may be configured to measure Y (and may or may not be configured to measure X), or may be configured to measure X and to measure Y (and may be configured to select which, or both, of X and Y to measure).Substantial variations may be made in accordance with specific requirements. For example, customized hardware might also be used, and/or particular elements might be implemented in hardware, software (including portable software, such as applets, etc.) executed by a processor, or both. Further, connection to other computing devices such as network input/output devices may be employed.

About" and/or "approximately" as used herein when referring to a measurable value such as an amount, a temporal duration, and the like, encompasses variations of ±20% or ±10%, ±5%, or +0.1% from the specified value, as appropriate in the context of the systems, devices, circuits, methods, and other implementations described herein. "Substantially" as used herein when referring to a measurable value such as an amount, a temporal duration, a physical attribute (such as frequency), and the like, also encompasses variations of ±20% or ±10%, ±5%, or +0.1% from the specified value, as appropriate in the context of the systems, devices, circuits, methods, and other implementations described herein.

The systems and devices discussed above are examples. Various configurations may omit, substitute, or add various procedures or components as appropriate. For instance, features described with respect to certain configurations may be combined in various other configurations. Different aspects and elements of the configurations may be combined in a similar manner. Also, technology evolves and, thus, many of the elements are examples and do not limit the scope of the disclosure or claims.

A wireless communication system is one in which communications are conveyed wirelessly, i.e., by electromagnetic and/or acoustic waves propagating through atmospheric space rather than through a wire or other physical connection. A wireless communication network may not have all communications transmitted wirelessly, but is configured to have at least some communications transmitted wirelessly. Further, the term "wireless communication device," or similar term, does not require that the functionality of the device is exclusively, or evenly primarily, for communication, or that the device be a mobile device, but indicates that the device includes wireless communication capability (one-way or two-way), e.g., includes at least one radio (each radio being part of a transmitter, receiver, or transceiver) for wireless communication.

Specific details are given in the description to provide a thorough understanding of example configurations (including implementations). However, configurations may be practiced without these specific details. For example, well-known circuits, processes, algorithms, structures, and techniques have been shown without unnecessary detail in order to avoid obscuring the configurations. This description provides example configurations, and does not limit the scope, applicability, or configurations of the claims. Rather, the preceding description of the configurations provides a description for implementing described techniques. Various changes may be made in the function and arrangement of elements without departing from the scope of the disclosure.

The terms "processor-readable medium," "machine-readable medium," and "computer-readable medium," as used herein, refer to any medium that participates in providing data that causes a machine to operate in a specific fashion. Using a computing platform, various processor-readable media might be involved in providing instructions/code to processor(s) for execution and/or might be used to store and/or carry such instructions/code (e.g., as signals). In many implementations, a processor-readable medium is a physical and/or tangible storage medium. Such a medium may take many forms, including but not limited to, non-volatile media and volatile media. Non-volatile media include, for example, optical and/or magnetic disks. Volatile media include, without limitation, dynamic memory.

A statement that a value exceeds (or is more than or above) a first threshold value is equivalent to a statement that the value meets or exceeds a second threshold value that is slightly greater than the first threshold value, e.g., the second threshold value being one value higher than the first threshold value in the resolution of a computing system. A statement that a value is less than (or is within or below) a first threshold value is equivalent to a statement that the value is less than or equal to a second threshold value that is slightly lower than the first threshold value, e.g., the second threshold value being one value lower than the first threshold value in the resolution of a computing system.

Implementation examples are described in the following numbered clauses:
1. A method for performing radio resource management measurements, comprising:
   receiving positioning assistance data including station location information;
   determining a current location and a future trajectory; and
   performing radio resource management measurements with one or more stations based at least in part on the positioning assistance data and the future trajectory.
2. The method of clause 1 wherein the positioning assistance data is included in one or more broadcast messages.
3. The method of clause 1 further comprising sending a request for positioning assistance data and receiving the positioning assistance data in response to sending the request.
4. The method of clause 1 wherein the positioning assistance data is included in one or more radio resource control messages.
5. The method of clause 1 wherein the positioning assistance data is included in one or more positioning system information blocks.
6. The method of clause 1 wherein the positioning assistance data is encrypted.
7. The method of clause 1 further comprising:
   determining one or more tangent lines based on the current location and the future trajectory;
   determining one or more tracking stations based on the station location information relative to the one or more tangent lines; and
   performing the radio resource management measurements with the one or more tracking stations.
8. The method of clause 1 further comprising:
   determining a range and a bearing to each of the one or more stations based on the station location information and the current location;
   determining one or more tracking stations based on the respective ranges and bearings of the one or more stations relative to the future trajectory; and
   performing the radio resource management measurements with the one or more tracking stations.
9. The method of clause 1 wherein the radio resource management measurements include one or more of Reference Signal Received Power (RSRP), Reference Signal Received Quality (RSRQ) and Signal To Interference plus Noise (SINR) values.
10. The method of clause 1 wherein the positioning assistance data includes real time delay information for the one or more stations, and the method further comprises:
   determining one or more search windows based on the real time delay information; and
   performing the radio resource management measurements based at least in part on the one or more search windows.
11. A method for obtaining radio resource management measurements in a search window, comprising:
   determining real time difference information for a plurality of network stations;
   determining the search window for radio resource management signals based at least in part on the real time difference information;
   receiving one or more radio resource management signals during the search window; and
   providing measurement information to a network based on the radio resource management signals.
12. The method of clause 11 further comprising receiving positioning assistance data including the real time difference information.
13. The method of clause 12 wherein the positioning assistance data is included in one or more broadcast messages.
14. The method of clause 12 further comprising sending a request for positioning assistance data and receiving the positioning assistance data in response to sending the request.
15. The method of clause 12 wherein the positioning assistance data is included in one or more radio resource control messages.
16. The method of clause 12 wherein the positioning assistance data is included in one or more positioning system information blocks.
17. The method of clause 11 wherein the radio resource management signals include at least one of a synchronization signal burst and a channel-state information reference signal.
18. The method of clause 11 wherein the measurement information include one or more of Reference Signal Received Power (RSRP), Reference Signal Received Quality (RSRQ) and Signal To Interference plus Noise (SINR) values.
19. The method of clause 11 wherein the search window is approximately 2 to 4 milliseconds in duration.
20. An apparatus, comprising:
   a memory;
   at least one transceiver;
   at least one processor communicatively coupled to the memory and the at least one transceiver and configured to:
   receive positioning assistance data including station location information;
   determine a current location and a future trajectory; and
   perform radio resource management measurements with one or more stations based at least in part on the positioning assistance data and the future trajectory.
21. The apparatus of clause 20 wherein the positioning assistance data is included in one or more broadcast messages.
22. The apparatus of clause 20 wherein the at least one processor is further configured to send a request for positioning assistance data and receive the positioning assistance data in response to sending the request.
23. The apparatus of clause 20 wherein the positioning assistance data is included in one or more radio resource control messages.
24. The apparatus of clause 20 wherein the positioning assistance data is included in one or more positioning system information blocks.
25. The apparatus of clause 20 wherein the positioning assistance data is encrypted.
26. The apparatus of clause 20 wherein the at least one processor is further configured to:
   determine one or more tangent lines based on the current location and the future trajectory;
   determine one or more tracking stations based on the station location information relative to the one or more tangent lines; and
   perform the radio resource management measurements with the one or more tracking stations.
27. The apparatus of clause 20 wherein the at least one processor is further configured to:
   determine a range and a bearing to each of the one or more stations based on the station location information and the current location;
   determine one or more tracking stations based on the respective ranges and bearings of the one or more stations relative to the future trajectory; and
   perform the radio resource management measurements with the one or more tracking stations.
28. The apparatus of clause 20 wherein the radio resource management measurements include one or more of Reference Signal Received Power (RSRP), Reference Signal Received Quality (RSRQ) and Signal To Interference plus Noise (SINR) values.
29. The apparatus of clause 20 wherein the positioning assistance data includes real time delay information for the one or more stations, and the at least one processor is further configured to:
   determine one or more search windows based on the real time delay information; and
   perform the radio resource management measurements based at least in part on the one or more search windows.
30. An apparatus, comprising:
   a memory;
   at least one transceiver;
   at least one processor communicatively coupled to the memory and the at least one transceiver and configured to:
      determine real time difference information for a plurality of network stations;
      determine a search window for radio resource management signals based at least in part on the real time difference information;
      receive one or more radio resource management signals during the search window; and
      provide measurement information to a network based on the radio resource management signals.
31. The apparatus of clause 30 wherein the at least one processor is further configured to receive positioning assistance data including the real time difference information.
32. The apparatus of clause 31 wherein the positioning assistance data is included in one or more broadcast messages.
33. The apparatus of clause 31 wherein the at least one processor is further configured to send a request for positioning assistance data and receive the positioning assistance data in response to sending the request.
34. The apparatus of clause 31 wherein the positioning assistance data is included in one or more radio resource control messages.
35. The apparatus of clause 31 wherein the positioning assistance data is included in one or more positioning system information blocks.
36. The apparatus of clause 30 wherein the radio resource management signals include at least one of a synchronization signal burst and a channel-state information reference signal.
37. The apparatus of clause 30 wherein the measurement information include one or more of Reference Signal Received Power (RSRP), Reference Signal Received Quality (RSRQ) and Signal To Interference plus Noise (SINR) values.
38. The apparatus of clause 30 wherein the search window is approximately 2 to 4 milliseconds in duration.
39. An apparatus for performing radio resource management measurements, comprising:
   means for receiving positioning assistance data including station location information;
   means for determining a current location and a future trajectory; and
   means for performing radio resource management measurements with one or more stations based at least in part on the positioning assistance data and the future trajectory.
40. An apparatus for obtaining radio resource management measurements in a search window, comprising:
   means for determining real time difference information for a plurality of network stations;
   means for determining the search window for radio resource management signals based at least in part on the real time difference information;
   means for receiving one or more radio resource management signals during the search window; and
   means for providing measurement information to a network based on the radio resource management signals.
41. A non-transitory processor-readable storage medium comprising processor-readable instructions configured to cause one or more processors to perform radio resource management measurements, comprising:
   code for receiving positioning assistance data including station location information;
   code for determining a current location and a future trajectory; and
   code for performing radio resource management measurements with one or more stations based at least in part on the positioning assistance data and the future trajectory.
42. A non-transitory processor-readable storage medium comprising processor-readable instructions configured to cause one or more processors to obtain radio resource management measurements in a search window, comprising:
   code for determining real time difference information for a plurality of network stations;
   code for determining the search window for radio resource management signals based at least in part on the real time difference information;
   code for receiving one or more radio resource management signals during the search window; and
   code for providing measurement information to a network based on the radio resource management signals.

Embodiments of the invention can be described with reference to the following numbered clauses, with preferred features laid out in the dependent clauses:
1. A method for performing radio resource management measurements, comprising:
   receiving positioning assistance data including station location information;
   determining a current location and a future trajectory; and
   performing radio resource management measurements with one or more stations based at least in part on the positioning assistance data and the future trajectory.
2. The method of clause 1 wherein the positioning assistance data is included in one or more broadcast messages.
3. The method of clause 1 further comprising sending a request for positioning assistance data and receiving the positioning assistance data in response to sending the request.
4. The method of clause 1 wherein the positioning assistance data is included in one or more radio resource control messages.
5. The method of clause 1 wherein the positioning assistance data is included in one or more positioning system information blocks.
6. The method of clause 1 wherein the positioning assistance data is encrypted.
7. The method of clause 1 further comprising:
   determining one or more tangent lines based on the current location and the future trajectory;
   determining one or more tracking stations based on the station location information relative to the one or more tangent lines; and
   performing the radio resource management measurements with the one or more tracking stations.
8. The method of clause 1 further comprising:
   determining a range and a bearing to each of the one or more stations based on the station location information and the current location;
   determining one or more tracking stations based on the respective ranges and bearings of the one or more stations relative to the future trajectory; and
   performing the radio resource management measurements with the one or more tracking stations.
9. The method of clause 1 wherein the radio resource management measurements include one or more of Reference Signal Received Power (RSRP), Reference Signal Received Quality (RSRQ) and Signal To Interference plus Noise (SINR) values.
10. The method of clause 1 wherein the positioning assistance data includes real time delay information for the one or more stations, and the method further comprises:
   determining one or more search windows based on the real time delay information; and
   performing the radio resource management measurements based at least in part on the one or more search windows.
11. A method for obtaining radio resource management measurements in a search window, comprising:
   determining real time difference information for a plurality of network stations;
   determining the search window for radio resource management signals based at least in part on the real time difference information;
   receiving one or more radio resource management signals during the search window; and
   providing measurement information to a network based on the radio resource management signals.
12. The method of clause 11 further comprising receiving positioning assistance data including the real time difference information.
13. The method of clause 12 wherein the positioning assistance data is included in one or more broadcast messages.
14. The method of clause 12 further comprising sending a request for positioning assistance data and receiving the positioning assistance data in response to sending the request.
15. The method of clause 12 wherein the positioning assistance data is included in one or more radio resource control messages.
16. The method of clause 12 wherein the positioning assistance data is included in one or more positioning system information blocks.
17. The method of clause 11 wherein the radio resource management signals include at least one of a synchronization signal burst and a channel-state information reference signal.
18. The method of clause 11 wherein the measurement information include one or more of Reference Signal Received Power (RSRP), Reference Signal Received Quality (RSRQ) and Signal To Interference plus Noise (SINR) values.
19. The method of clause 11 wherein the search window is approximately 2 to 4 milliseconds in duration.
20. An apparatus, comprising:
   a memory;
   at least one transceiver;
   at least one processor communicatively coupled to the memory and the at least one transceiver and configured to:
      receive positioning assistance data including station location information;
      determine a current location and a future trajectory; and
      perform radio resource management measurements with one or more stations based at least in part on the positioning assistance data and the future trajectory.
21. The apparatus of clause 20 wherein the at least one processor is further configured to send a request for positioning assistance data and receive the positioning assistance data in response to sending the request.
22. The apparatus of clause 20 wherein the at least one processor is further configured to:
   determine one or more tangent lines based on the current location and the future trajectory;
   determine one or more tracking stations based on the station location information relative to the one or more tangent lines; and
   perform the radio resource management measurements with the one or more tracking stations.
23. The apparatus of clause 20 wherein the at least one processor is further configured to:
   determine a range and a bearing to each of the one or more stations based on the station location information and the current location;
   determine one or more tracking stations based on the respective ranges and bearings of the one or more stations relative to the future trajectory; and
   perform the radio resource management measurements with the one or more tracking stations.
24. The apparatus of clause 20 wherein the positioning assistance data includes real time delay information for the one or more stations, and the at least one processor is further configured to:
   determine one or more search windows based on the real time delay information; and
   perform the radio resource management measurements based at least in part on the one or more search windows.
25. An apparatus, comprising:
   a memory;
   at least one transceiver;
   at least one processor communicatively coupled to the memory and the at least one transceiver and configured to:
      determine real time difference information for a plurality of network stations;
      determine a search window for radio resource management signals based at least in part on the real time difference information;
      receive one or more radio resource management signals during the search window; and
      provide measurement information to a network based on the radio resource management signals.
26. The apparatus of clause 25 wherein the at least one processor is further configured to receive positioning assistance data including the real time difference information.
27. The apparatus of clause 26 wherein the at least one processor is further configured to send a request for positioning assistance data and receive the positioning assistance data in response to sending the request.
28. The apparatus of clause 26 wherein the positioning assistance data is included in one or more radio resource control messages.
29. The apparatus of clause 25 wherein the radio resource management signals include at least one of a synchronization signal burst and a channel-state information reference signal.
30. The apparatus of clause 25 wherein the search window is approximately 2 to 4 milliseconds in duration.

## Claims

1. A method for obtaining radio resource management measurements in a search window, comprising:
determining real time difference information for a plurality of network stations;
determining the search window for radio resource management signals based at least in part on the real time difference information;
receiving one or more radio resource management signals during the search window; and
providing measurement information to a network based on the radio resource management signals.

2. The method of claim 1 further comprising receiving positioning assistance data including the real time difference information.

3. The method of claim 2 wherein the positioning assistance data is included in one or more broadcast messages.

4. The method of claim 2 further comprising sending a request for positioning assistance data and receiving the positioning assistance data in response to sending the request.

5. The method of claim 2 wherein the positioning assistance data is included in one or more radio resource control messages.

6. The method of claim 2 wherein the positioning assistance data is included in one or more positioning system information blocks.

7. The method of claim 1 wherein the radio resource management signals include at least one of a synchronization signal burst and a channel-state information reference signal.

8. The method of claim 1 wherein the measurement information include one or more of Reference Signal Received Power (RSRP), Reference Signal Received Quality (RSRQ) and Signal To Interference plus Noise (SINR) values.

9. The method of claim 1 wherein the search window is approximately 2 to 4 milliseconds in duration.

10. An apparatus, comprising:
a memory;
at least one transceiver;
at least one processor communicatively coupled to the memory and the at least one transceiver and configured to:
determine real time difference information for a plurality of network stations;
determine a search window for radio resource management signals based at least in part on the real time difference information;
receive one or more radio resource management signals during the search window; and
provide measurement information to a network based on the radio resource management signals.

11. The apparatus of claim 10 wherein the at least one processor is further configured to receive positioning assistance data including the real time difference information.

12. The apparatus of claim 11 wherein the at least one processor is further configured to send a request for positioning assistance data and receive the positioning assistance data in response to sending the request.

13. The apparatus of claim 11 wherein the positioning assistance data is included in one or more radio resource control messages.

14. The apparatus of claim 10 wherein the radio resource management signals include at least one of a synchronization signal burst and a channel-state information reference signal.

15. The apparatus of claim 10 wherein the search window is approximately 2 to 4 milliseconds in duration.
